# EUROPEAN PATENT APPLICATION

(11) **EP 3 805 970 A1**
(43) Date of publication of application: **14.04.2021**
(21) Application number: 19812010.7
(22) Date of filing: 22.05.2019
(51) Int. Cl.: G06F 21/62, G06F 21/64, G06Q 20/06

(54) **INFORMATION PROCESSING DEVICE, INFORMATION PROCESSING METHOD, AND PROGRAM**

(30) Priority: 31.05.2018 JP 2018104546
(71) Applicant: Sony Corporation, 108-0075 Tokyo (JP)
(72) Inventor: MATSUNAGA, Kaoru, Tokyo 108-0075 (JP); KATAYAMA, Takeshi, Tokyo 108-0075 (JP); KATO, Yasuyuki, Tokyo 108-0075 (JP); SASAKI, Daisuke, Tokyo 108-0075 (JP)
(74) Representative: Witte, Weller & Partner Patentanwälte mbB
(86) International application number: PCT/JP2019/020363
(87) International publication number: WO 2019/230540

(57) **Abstract**

Provided is an information processing device including a block generation unit (113) configured to generate a block to be connected to a blockchain, the block including first related data associated with first data that is at least part of data included in an immediately preceding block and second related data associated with data included in the immediately preceding block and including at least second data different from the first data.

## Description

### TECHNICAL FIELD

The present disclosure relates to an information processing device, an information processing method, and a program.

### BACKGROUND ART

In recent years, services using blockchains have been actively developed. For example, Bitcoin uses a blockchain for sending and receiving virtual currency. The blockchain can prevent tampering with registered data and store the registered data with high reliability by a mutual monitoring effect for nodes by a plurality of operators.

For example, Patent Document 1 below discloses a technology of determining whether or not a generator who uses a blockchain generation device is eligible for generating a new block, using transaction data related to an identifier of the generator, and controlling generation of the new block on the basis of a determination result.

### CITATION LIST

### PATENT DOCUMENT

Patent Document 1: Japanese Patent Application Laid-Open No. 2017-91148

### SUMMARY OF THE INVENTION

### PROBLEMS TO BE SOLVED BY THE INVENTION

Here, the blockchain basically secures authenticity of the data registered in the blockchain by keeping all the data without deleting the data. Therefore, as an operation period of the blockchain becomes longer, the data size of the entire blockchain becomes enormous, which may consume enormous information processing resources.

Therefore, the present disclosure has been made in view of the foregoing, and the present disclosure provides new and improved information processing device, information processing method, and program capable of deleting part of data registered in a blockchain.

### SOLUTIONS TO PROBLEMS

According to the present disclosure, provided is an information processing device including a block generation unit configured to generate a block to be connected to a blockchain, the block including first related data associated with first data that is at least part of data included in an immediately preceding block and second related data associated with data included in the immediately preceding block and including at least second data different from the first data.

Furthermore, according to the present disclosure, provided is an information processing method executed by a computer, the information processing method including generating a block to be connected to a blockchain, the block including first related data associated with first data that is at least part of data included in an immediately preceding block and second related data associated with data included in the immediately preceding block and including at least second data different from the first data.

Furthermore, according to the present disclosure, provided is a program for causing a computer to implement generating a block to be connected to a blockchain, the block including first related data associated with first data that is at least part of data included in an immediately preceding block and second related data associated with data included in the immediately preceding block and including at least second data different from the first data.

Furthermore, according to the present disclosure, provided is an information processing device including a data deletion unit configured to delete at least part of second data from some blocks connected to a blockchain, the block including first related data associated with first data that is at least part of data included in an immediately preceding block and second related data associated with data included in the immediately preceding block and including at least the second data different from the first data.

Furthermore, according to the present disclosure, provided is an information processing method executed by a computer, the information processing method including deleting at least part of second data from some blocks connected to a blockchain, the block including first related data associated with first data that is at least part of data included in an immediately preceding block and second related data associated with data included in the immediately preceding block and including at least the second data different from the first data.

Furthermore, according to the present disclosure, provided is a program for causing a computer to implement deleting at least part of second data from some blocks connected to a blockchain, the block including first related data associated with first data that is at least part of data included in an immediately preceding block and second related data associated with data included in the immediately preceding block and including at least the second data different from the first data.

### EFFECTS OF THE INVENTION

As described above, according to the present disclosure, part of data registered in a blockchain can be deleted.

Note that the above-described effect is not necessarily limited, and any of effects described in the present specification or other effects that can be grasped from the present specification may be exerted in addition to or in place of the above-described effect.

### BRIEF DESCRIPTION OF DRAWINGS

Fig. 1 is a diagram for describing an outline of a blockchain.
Fig. 2 is a diagram for describing an outline of a blockchain.
Fig. 3 is a diagram for describing an outline of a blockchain.
Fig. 4 is a diagram illustrating a specific example of blocks generated by a block generation device 100.
Fig. 5 is a diagram illustrating a specific example of deletion of data registered in a blockchain by a data deletion device 200.
Fig. 6 is a diagram illustrating an image in a case where the present disclosure is applied to a physical distribution system.
Fig. 7 is a diagram illustrating a specific example of deletion of data registered in a blockchain by the data deletion device 200.
Fig. 8 is a diagram illustrating a specific example of deletion of data registered in a blockchain by the data deletion device 200.
Fig. 9 is a diagram illustrating a specific example of deletion of data registered in a blockchain by the data deletion device 200.
Fig. 10 is a diagram illustrating a configuration example of an information processing system according to the present embodiment.
Fig. 11 is a block diagram illustrating a functional configuration example of a transaction generation device 300.
Fig. 12 is a block diagram illustrating a functional configuration example of a block generation device 100.
Fig. 13 is a diagram illustrating a specific example of types of transaction data generatable on the basis of authority information and position information.
Fig. 14 is a block diagram illustrating a functional configuration example of the data deletion device 200.
Fig. 15 is a diagram illustrating a specific example of types of transaction data deletable on the basis of authority information and position information.
Fig. 16 is a flowchart illustrating a specific example of transaction data generation processing by the transaction generation device 300.
Fig. 17 is a flowchart illustrating a specific example of block generation processing by the block generation device 100.
Fig. 18 is a flowchart illustrating a specific example of the block generation processing by the block generation device 100.
Fig. 19 is a flowchart illustrating a specific example of second data deletion processing by the data deletion device 200.
Fig. 20 is a diagram illustrating a mode of second related data according to a modification.
Fig. 21 is a diagram illustrating a mode of second related data according to a modification.
Fig. 22 is a diagram illustrating a mode of second related data according to a modification.
Fig. 23 is a block diagram illustrating a hardware configuration example of an information processing device 900 that embodies the block generation device 100, the data deletion device 200, or the transaction generation device 300.

### MODE FOR CARRYING OUT THE INVENTION

A favorable embodiment of the present disclosure will be described in detail with reference to the appended drawings. Note that, in the present specification and drawings, redundant description of configuration elements having substantially the same functional configuration is omitted by providing the same sign.

Note that the description will be given in the following order.
1. Outline of Blockchain
2. Embodiment
   2.1. Outline of Present Disclosure
   2.2. Outline of Information Processing System
   2.3. Functional Configuration Example of Transaction Generation Device 300
   2.4. Functional Configuration Example of Block Generation Device 100
   2.5. Functional Configuration Example of Data Deletion Device 200
   2.6. Processing Flow
3. Modification
4. Hardware Configuration Example
5. Conclusion

### <1. Outline of Blockchain>

In an information processing system according to the present embodiment, a blockchain is used, which is one type of distributed peer-to-peer databases distributed in a peer-to-peer network (also referred to as "peer-to-peer distributed file system"). Therefore, first, an outline of a blockchain will be described before describing an embodiment of the present disclosure.

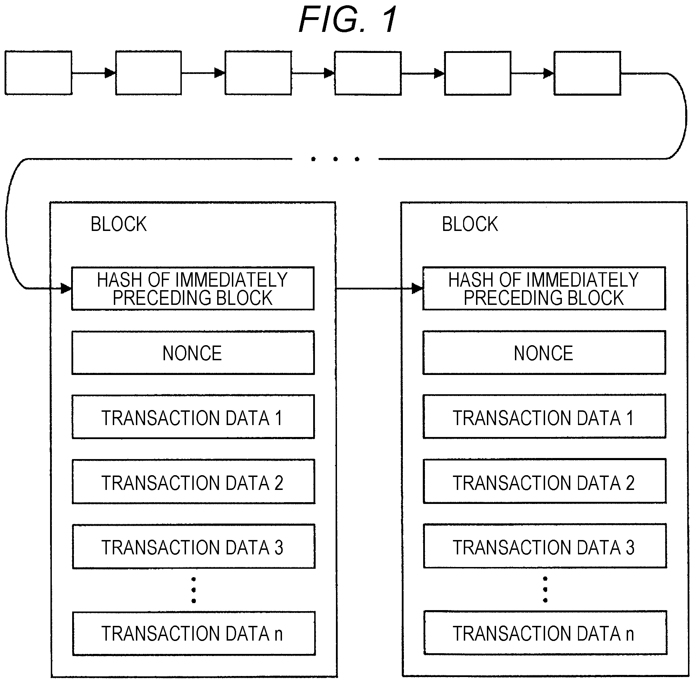

As illustrated in Fig. 1, a blockchain is data in which a plurality of blocks is included in a chain-like manner. One or more data can be stored in each block as transaction data (transaction data 1 to transaction data n in Fig. 1).

Examples of the blockchain include a blockchain used for sending and receiving data of virtual currency such as Bitcoin. The blockchain used for sending and receiving data of virtual currency includes, for example, values called hash of an immediately preceding block and nonce. The hash of an immediately preceding block is information used for determining whether or not the block is a "correct block" correctly connected from the immediately preceding block. The nonce is information used for preventing spoofing in authentication using a hash, and tampering is prevented by using the nonce. Examples of the nonce include a character string, a number string, and data indicating a combination thereof.

Furthermore, in the blockchain, spoofing is prevented by adding an electronic signature using an encryption key to each transaction data. Furthermore, each transaction data is made public and shared throughout a blockchain network. Note that each transaction data may be encrypted using an encryption key.

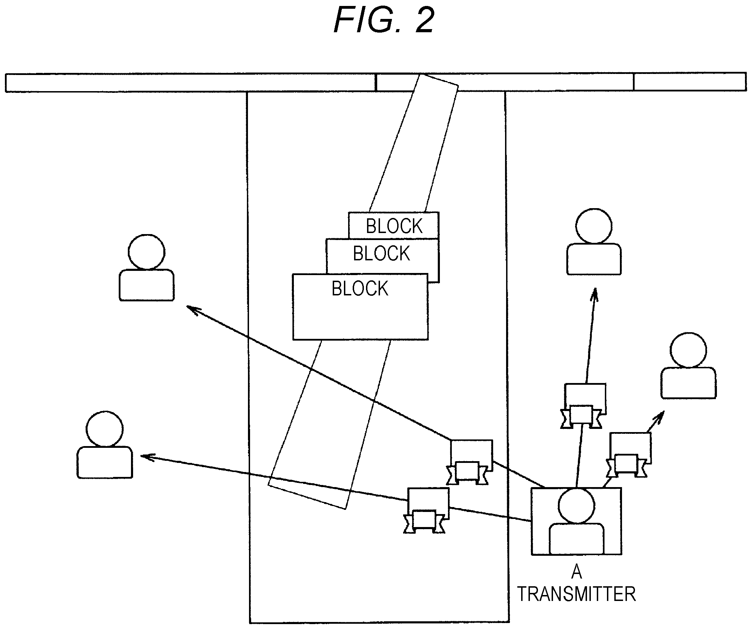

Fig. 2 is a diagram illustrating a state in which target data (for example, a coin in Bitcoin) included in the transaction data is registered by a user A in a blockchain system. The user A attaches an electronic signature generated using a private key of the user A to the target data to be registered in the blockchain. Then, the user A broadcasts the transaction data including the target data with the electronic signature onto the blockchain network. This secures that an owner of the target data is the user A.

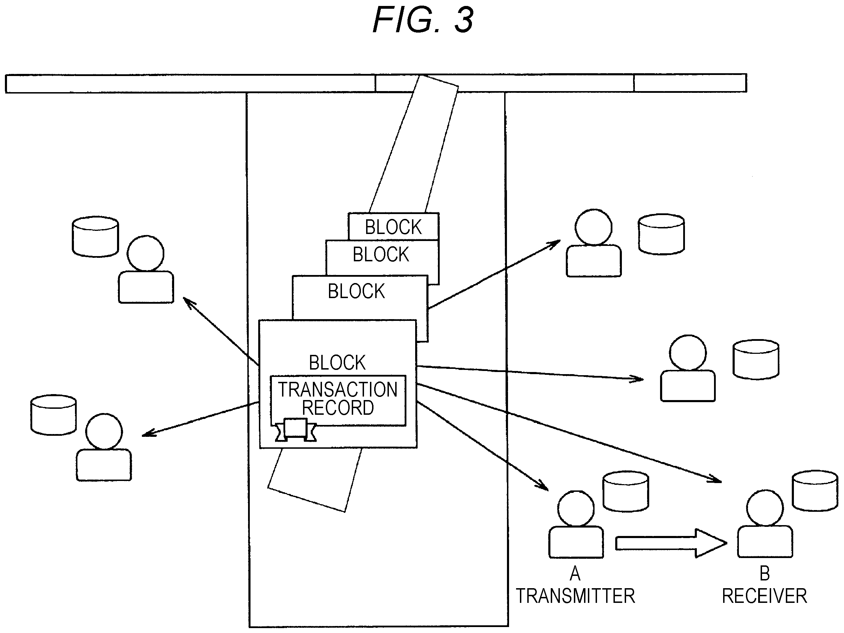

Fig. 3 is a diagram illustrating a state in which target data is transferred from the user A to a user B in the blockchain system. The user A attaches the electronic signature generated using the private key of the user A to the transaction data, and includes a private key of the user B to the transaction data. This shows that the target data is transferred from the user A to the user B. Furthermore, the user B may acquire a public key of the user A from the user A in transaction of the target data, and acquire the target data with the electronic signature or the encrypted target data.

Furthermore, in the blockchain system, another target data, which is different from virtual currency, can be included in the blockchain used for sending and receiving the existing virtual currency data, such as the blockchain of Bitcoin, using a sidechain technology, for example.

### <2. Embodiment>

### (2.1. Outline of Present Disclosure)

Next, an outline of the present disclosure will be described.

As described above, a blockchain basically secures authenticity of data registered in a blockchain by keeping all the data without deleting the data. More specifically, a hash of an immediately preceding block is registered in each block in the blockchain, so that the blocks are associated with each other. Then, in a case where transaction data included in a certain block is deleted or tampered with, the hash in the block changes and loses consistency with the hash included in an immediately subsequent block. Therefore, detection or tampering with the transaction data can be detected. Meanwhile, to keep the consistency of the entire blockchain, deletion of the data once registered in the blockchain is difficult. Therefore, as an operation period of the blockchain becomes longer, the data size of the entire blockchain becomes enormous, which may consume enormous information processing resources.

Here, from another point of view, it is not always necessary to keep all of data among various data held in various information processing systems. For example, in an information processing system regarding distribution, after an article to be distributed has reached the end of distribution and a considerable period of time (for example, several months to several years) has elapsed, there are some cases where no problem occurs in business even if some data (for example, product information or route information) generated in the distribution process is deleted.

The discloser of the present case has created the technology according to the present disclosure in view of the above circumstances. An information processing device (hereinafter called "block generation device 100") that generates a block to be connected to a blockchain generates a block including first related data (for example, a hash of first data) associated with first data that is at least part of data included in an immediately preceding block and second related data (for example, a hash of data including at least second data different from the first data) associated with data included in the immediately preceding block and including at least second data different from the first data, and connects the block to the blockchain.

Thereby, an information processing device (hereinafter called "data deletion device 200") that deletes data registered in the blockchain can delete at least part of the second data from some blocks connected to the blockchain.

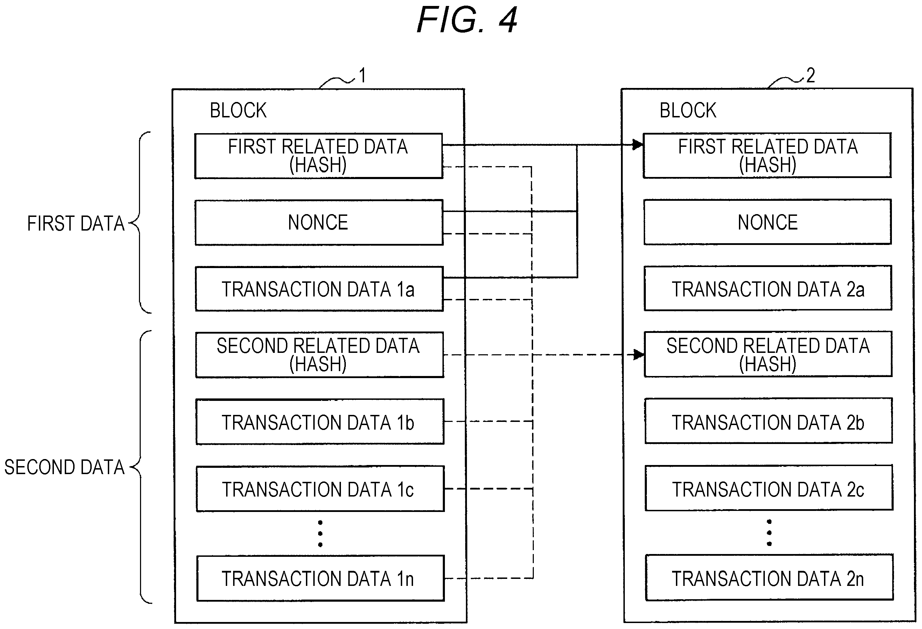

Here, a specific example of the block generated by the block generation device 100 will be described with reference to Fig. 4. For example, consider a case in which a block 1 illustrated in Fig. 4 is connected to an end of the blockchain, and the block generation device 100 generates a block 2.

As illustrated in Fig. 4, each block according to the present disclosure includes the first data and the second data. The "first data" is data that is not targeted for deletion. In the example in Fig. 4, the first related data, a nonce (nonce data of the blockchain, which is independent of the second data), and transaction data 1a are included in the block 1 as the first data. Meanwhile, the "second data" is data that may be targeted for deletion (in other words, the second data may not be targeted for deletion). In the example in Fig. 4, the second related data and transaction data 1b to 1n are included as the second data in the block 1. Note that content of the first data and the second data is not limited to the content illustrated in Fig. 4.

Then, the block generation device 100 generates the first related data associated with the first data included in the block 1 and includes the first related data in the block 2. Here, the "first related data" is data assumed to be generated when the first data is input to a predetermined hash (for example, SHA-256, RIPEMD-160, or the like) for generating a hash (in other words, the first related data is assumed to be associated with the first data by a hash). Since a possibility that the same hash is generated by pieces of data different from each other is extremely low (in other words, the hash has strong collision resistance), the first related data that is the hash of the first data can be said to be information uniquely determined by the first data. Note that the type of a hash function used for association is not particularly limited. Furthermore, the method of associating the first data with the first related data is not limited to a hash. For example, the first related data may be any information as long as the information is uniquely determined by the first data.

Furthermore, the block generation device 100 generates the second related data associated with data including at least the second data included in the block 1, and includes the second related data in the block 2. In other words, the data associated with the second related data may include the first data in addition to the second data (in the example in Fig. 4, all the first data are included in the data associated with the second related data). Here, the "second related data" is also data assumed to be generated when the data including at least the second data is input to a predetermined hash (for example, SHA-256, RIPEMD-160, or the like), similarly to the first related data. Note that, as for the second related data, the type of a hash function used for association is not particularly limited. Furthermore, the method of associating the data including at least the second data with the second related data is not limited to a hash. For example, the second related data may be any information as long as the information is uniquely determined by the second data.

The block generation device 100 generates the block 2 by including the nonce and the transaction data (transaction data 2a to 2n in Fig. 4) in addition to the first related data and the second related data generated by the above methods. By a similar method, the block generation device 100 connects the blocks to form a blockchain.

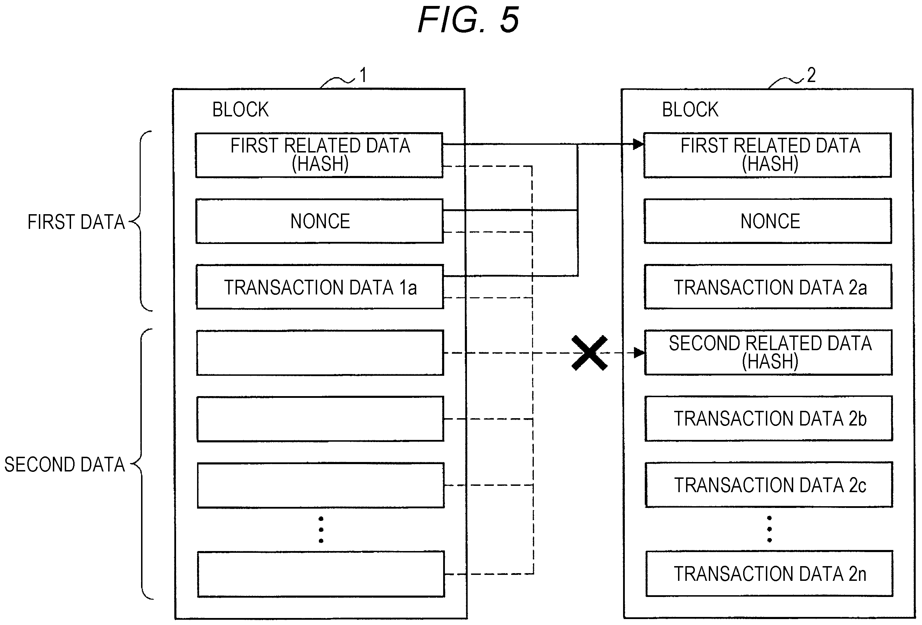

Then, the data deletion device 200 deletes at least part of the second data from some blocks connected to the blockchain configured by the above method. For example, as illustrated in Fig. 5, the data deletion device 200 may delete all the second data included in the block 1. Thereby, the association between the second related data included in the block 2 and the block 1 is lost, but the authenticity of the first data is secured because the association between the first related data included in the block 2 and the block 1 remains.

However, there are some cases where the authenticity of the second data that has not been deleted is not sufficiently secured. For example, in Fig. 5, in the case where the second data included in block 1 is deleted, a risk that the second data included in block 2 is deleted or tampered with increases.

Therefore, the present disclosure provides authority information for enabling deletion of the second data so that the second data is deleted only by an entity (for example, a person or an information processing device) having the authority. More specifically, the data deletion device 200 confirms the authority information required to delete the second data, and determines whether or not to delete the second data on the basis of the confirmation result. This reduces the risk of the second data being deleted by a malicious third party, for example. Here, a plurality of pieces of authority information may be provided, and the content of the deletable second data may be different for each piece of authority information. With the configuration, in the case where there is a plurality of data deletion devices 200 (in other words, in the case where there is a plurality of entities (for example, people or information processing devices) that deletes data), second data deletion processing can be more finely controlled.

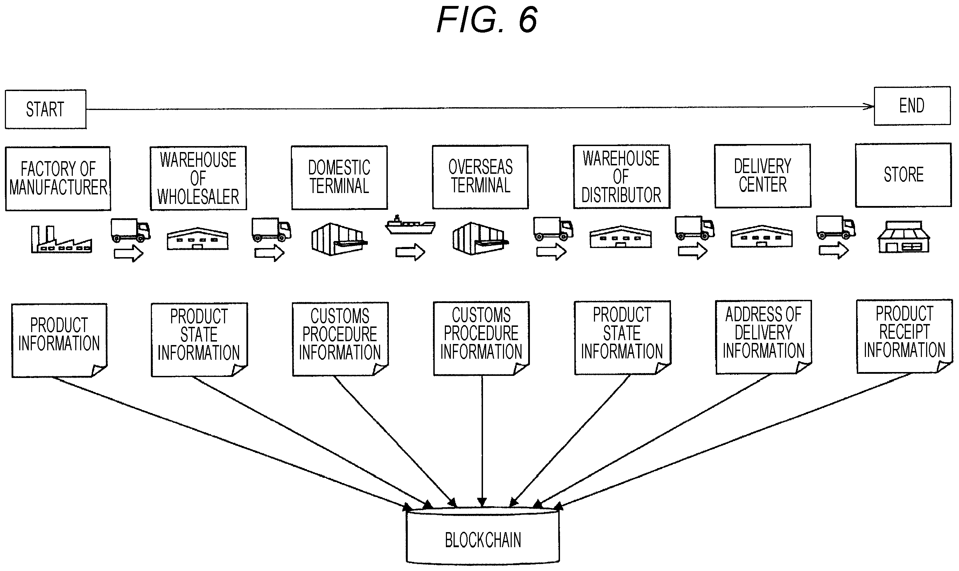

Furthermore, the data deletion device 200 determines whether or not to delete the second data on the basis of position information of a tangible object corresponding to the transaction data included in the second data. Here, a case where the present disclosure is applied to a physical distribution system will be more specifically described as an example with reference to Fig. 6. Fig. 6 illustrates a distribution process in the case of distributing a certain article and an example of data generated in each process. In the case where the present disclosure is applied to a physical distribution system, the "tangible object" includes, for example, an article to be distributed, and the "transaction data" includes, for example, data (product information or the like in Fig. 6) generated in each process (a factory of a manufacturer or the like in Fig. 6).

Furthermore, the "position information" is information indicating the position of the article (tangible object) at a point of time when the transaction data is generated (note that the "point of time when the transaction data is generated" includes a point of time when the transaction data is generated or within a predetermined time before and after the point of time) Then, the data deletion device 200 determines whether or not to delete the second data on the basis of the position information (note that whether or not to delete the second data being determined on the basis of the position information is equivalent to the authority information for enabling deletion of the second data being set on the basis of the position information). For example, in Fig. 6, in a case where a store that is the end of distribution registers product receipt information to the blockchain as the transaction data, the data deletion device 200 deletes the transaction data in a case where the data deletion device 200 can confirm that the position information of the article at the point of time when the transaction data is generated indicates the position of the store. This prevents the transaction data regarding the article from being deleted in a case where the article is located in the middle of distribution, for example. Note that timing at which the second data is deleted is not particularly limited. For example, in a case where the data deletion device 200 determines that a predetermined condition is satisfied on the basis of the position information even in the case where the article is located in the middle of distribution, the data deletion device 200 may delete the transaction data regarding the article.

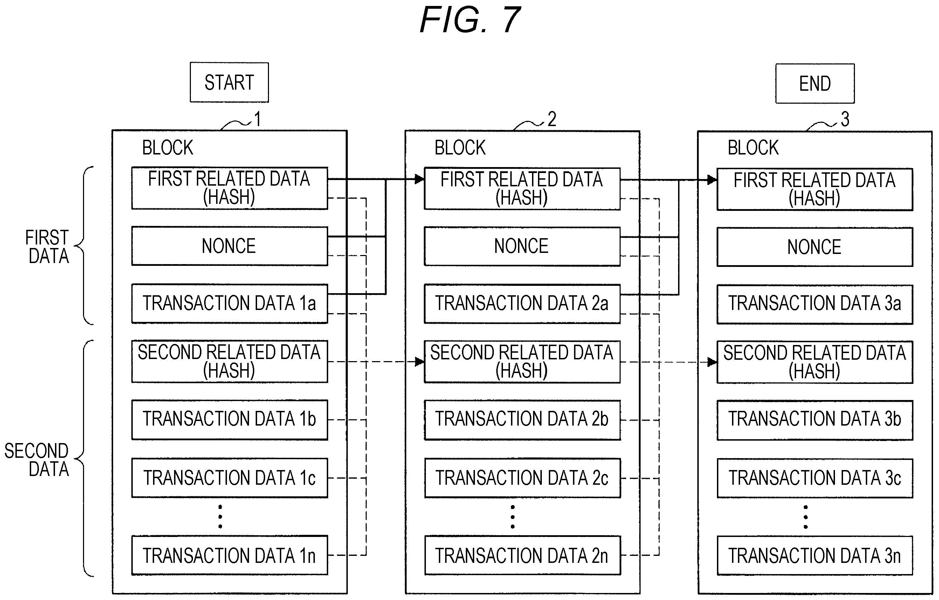

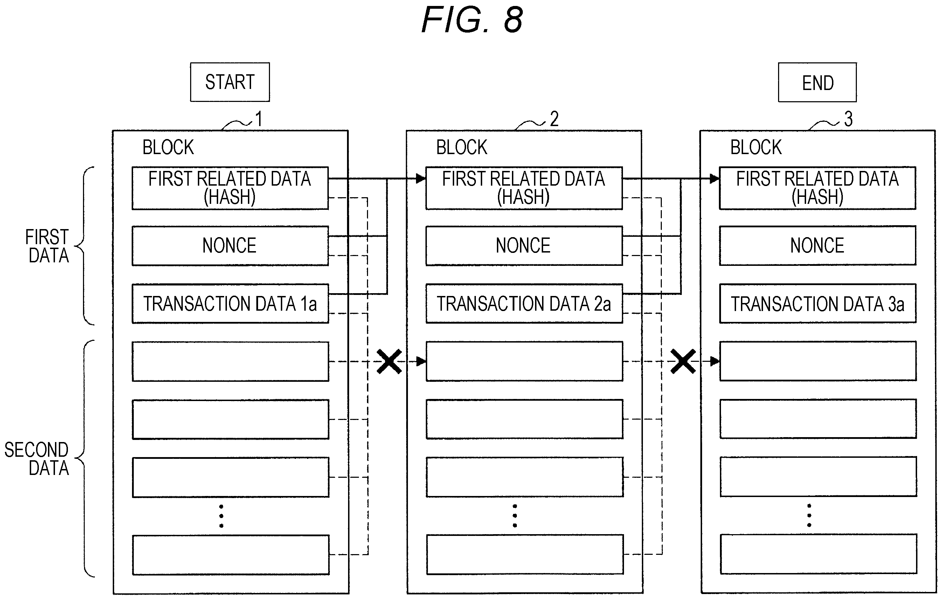

Moreover, the data deletion device 200 specifies a section determined on the basis of the position information, and deletes the second data present in the section, that is, the second data corresponding to the section. The "section determined on the basis of the position information" is a section corresponding to the start and the end of distribution in Fig. 6, for example (in other words, a section from the factory of the manufacturer that is the start of distribution to the store that is the end of distribution). For example, it is assumed that the block 1 includes the transaction data (for example, the product information) generated in the factory of the manufacturer that is the start of distribution, and a block 3 includes the transaction data (for example, the product receipt information) generated in the store that is the end of distribution, as illustrated in Fig. 7. In this case, the data deletion device 200 deletes the second data in the section from the block 1 that is the start of distribution to the block 3 that is the end of distribution (meanwhile, the first data is not deleted and is maintained), as illustrated in Fig. 8. The section targeted for data deletion is set in this way, so that the data deletion device 200 can collectively delete the second data present from the start to the end of distribution of a certain article.

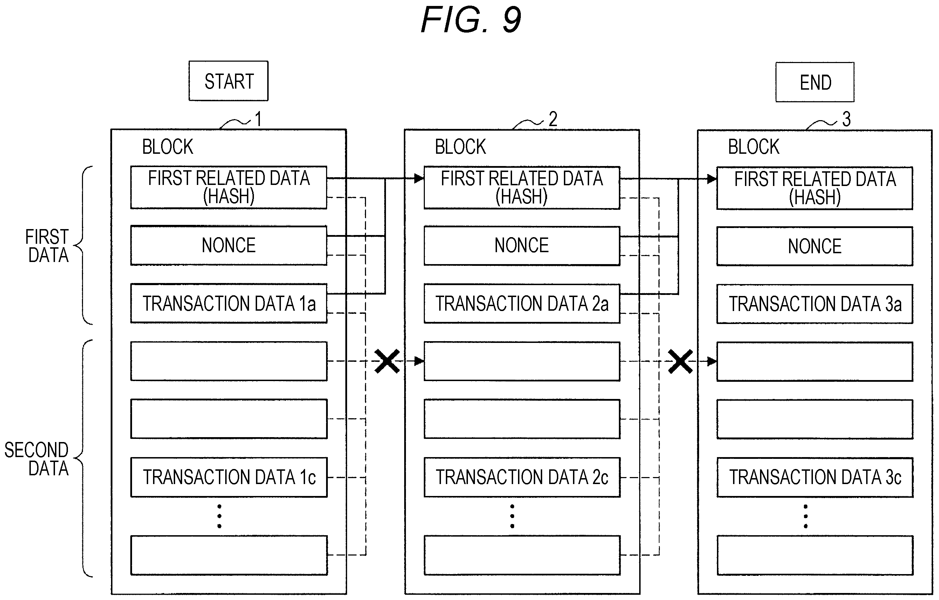

Note that, basically, the data deletion device 200 is supposed to delete all the second data present in the section targeted for data deletion at one time. However, the data deletion mode is not limited thereto. For example, as illustrated in Fig. 9, the data deletion device 200 may delete only part of the second data present in the section targeted for data deletion. In the example in Fig. 9, the second data other than transaction data 1c, transaction data 2c, and transaction data 3c is deleted. This reduces reliability of the transaction data 1c, the transaction data 2c, and the transaction data 3c, but the data deletion device 200 can flexibly determine the transaction data to be deleted for operational reasons. Furthermore, the data deletion device 200 may delete the second data stepwise. More specifically, the data deletion device 200 may delete the transaction data, which has not been deleted and left once, at a later time, as in the example in Fig. 9 Furthermore, the data deletion devices 200 are basically supposed to uniform the content of the blockchains held in the respective devices by matching up the second data targeted for deletion. However, the configuration is not limited thereto. For example, a certain data deletion device 200 may continue to hold, without exceptionally deleting, the second data deleted by another data deletion device 200.

Furthermore, in the examples in Figs. 7 to 9, the case in which the section targeted for data deletion is set in units of blocks has been taken as an example. However, the configuration is not limited to the case. For example, the section targeted for data deletion may be set in units of transaction data included in the block.

Further, the blockchain may be generated for each tangible object corresponding to the transaction data. For example, a new blockchain may be generated when an article is manufactured and placed in the distribution process, and addition of a new block to the blockchain may be stopped when the article reaches the end of the distribution process. As a result, the transaction data registered in each block are all related to one tangible object. Therefore, the section targeted for data deletion is easily set in units of blocks, as in the examples in Figs. 7 to 9.

Furthermore, in the above description, the case of using proof of work (POW) as an algorithm (so-called consensus algorithm) for building a consensus in the blockchain network has been described as an example, and thus the nonce is included in each block but the type of the consensus algorithm is not particularly limited (in other words, the nonce may not be included in the block). For example, as the consensus algorithm, proof of stake (POS), proof of importance (POI), proof of consensus (POC), proof of burn (POB), practical byzantine fault tolerance (PBFT), or the like may be used. For example, in a case of using a consortium (or private) blockchain, PBFT is used as the consensus algorithm, so that the time and cost required to generate a block can be reduced.

Furthermore, in the above description, the first data and the second data are included in all the blocks. However, the embodiment is not necessarily limited thereto. For example, a block not including the second data may present (in this case, the next block do not include the second related data) among the blocks connected to the blockchain.

Furthermore, the above description has been made such that the deletion of the second data becomes possible as the blocks are associated by the first related data and the second related data (in other words, two types of association are performed). However, three or more types of association may be performed. For example, third related data associated with data including at least third data different from the first and second data may be provided in addition to the first related data and the second related data. Thereby, the data deletion device 200 may be able to delete not only the second data but also at least part of the third data. Note that the timing of deleting the second data and the timing of deleting the third data may be different from each other. As described above, the association of three or more types of data enables more flexible deletion of data. Note that, in the above-description, the "third data" is so called for the sake of convenience. However, the third data can be said to be one type of second data in the sense that the third data can be targeted for deletion, similarly to the second data (that is, the third related data can be said to be one type of the second related data).

### (2.2. Outline of Information Processing System)

The outline of the present disclosure has been described. Next, an outline of the information processing system according to the embodiment of the present disclosure will be described.

Hereinafter, a case in which the present disclosure is applied to a physical distribution system will be described as an example. More specifically, in the information processing system according to the present embodiment, the information processing devices owned by entities related to a distribution process of a certain article (for example, a manufacturer, a wholesaler, a distributor, and a dealer) are connected to the blockchain network, and data generated by these entities in the distribution process of the article are registered in the blockchain as the transaction data. Note that the information processing system (or service) to which the present disclosure is applied is not particularly limited. For example, the present disclosure may be applied to a manufacturing management system that manages a manufacturing process of a certain article, or the like.

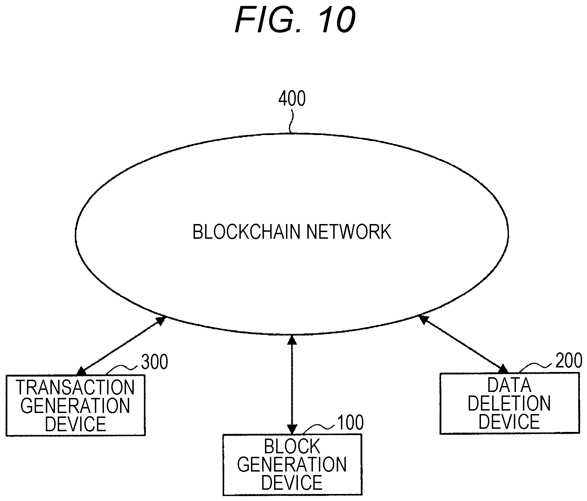

Here, a configuration example of the information processing system according to the present embodiment will be described with reference to Fig. 10. Fig. 10 is a diagram illustrating a configuration example of the information processing system according to the present embodiment.

As illustrated in Fig. 10, the information processing system according to the present embodiment includes the transaction generation device 300, the block generation device 100, the data deletion device 200, and a blockchain network 400.

In the present document, the transaction generation device 300, the block generation device 100, and the data deletion device 200 are separately described for convenience. However, all or some of the functions of these devices may be implemented by one information processing device or may be implemented by distributed processing by a plurality of information processing devices. Then, in the information processing system according to the present embodiment, the information processing devices owned by the entities related to the distribution process of a certain article (for example, a manufacturer, a wholesaler, a distributor, and a dealer illustrated in Fig. 6) are connected to the blockchain network 400, and implement all or part of the functions of the transaction generation device 300, the block generation device 100, and the data deletion device 200.

### (Transaction Generation Device 300)

The transaction generation device 300 is an information processing device that generates the transaction data to be registered in the blockchain. The transaction generation device 300 is connected to the blockchain network 400, and the transaction data generated by the transaction generation device 300 is shared with (broadcasted to) other information processing devices (for example, the block generation device 100, the data deletion device 200, and another transaction generation device 300) via the blockchain network 400.

Furthermore, in generating the transaction data, the transaction generation device 300 associates information indicating a generation source of the transaction data (hereinafter the information is called "generation source information" for convenience) with the transaction data. The "generation source information" is information mainly used to determine whether or not the transaction data has been generated by an appropriate party, and includes, but is not limited to, information (for example, an ID of the entity related to the distribution process) for uniquely specifying the generation source of the transaction data. For example, in a case where the generation source of the transaction data belongs to some group, the "generation source information" may be an ID of the group. Note that the method of associating the transaction data with the generation source information is not particularly limited. For example, the transaction generation device 300 may include the generation source information in the transaction data to associate these pieces of data. In a case where a storage unit that manages the generation source information is separately present, the transaction generation device 300 may include information indicating a transaction in the generation source information in the storage unit to associate these pieces of data.

Furthermore, in generating the transaction data, the transaction generation device 300 associates the position information of tangible object corresponding to the transaction data with the transaction data. Since the content of the tangible object and the position information has been described above, description thereof is omitted. The position information is used to determine whether or not the transaction data is appropriate transaction data in generating a new block by the block generation device 100, and is used to determine whether or not to delete the transaction data in deleting the transaction data by the data deletion device 200. Note that the method of associating the transaction data with the position information is not particularly limited, similarly to the case of the generation source information. For example, the transaction generation device 300 may include the position information in the transaction data to associate these pieces of data. In a case where a storage unit that manages the position information is separately present, the transaction generation device 300 may include information indicating a transaction in the position information in the storage unit to associate these pieces of data.

### (Block Generation Device 100)

The block generation device 100 is an information processing device that generates a block to be connected to the blockchain when a predetermined condition is satisfied. Block generation processing will be more specifically described. The block generation device 100 specifies the transaction data to be included to a new block from among the transaction data generated by the transaction generation device 300 and shared via the blockchain network 400, and collects the transaction data. At that time, the block generation device 100 confirms the authority information of the generation source on the basis of the generation source information associated with the transaction data. More specifically, the block generation device 100 determines whether or not the generation source of the transaction data has appropriate authority information. The block generation device 100 includes the transaction data to the new block in a case where the generation source of the transaction data has the appropriate authority information, or does not include the transaction data to the new block otherwise.

Furthermore, the block generation device 100 confirms the position information of the tangible object corresponding to the transaction data on the basis of the position information associated with the transaction data. Then, the block generation device 100 determines whether or not the transaction data is appropriate in relation to the position of the tangible object. In the physical distribution system, the generated transaction data is often determined by the distribution process, that is, the transaction data is associated with information of the distribution process (note that the embodiment is not limited to the physical distribution system). For example, the product information, which is information regarding a manufactured product, is often generated at the manufacturer's factory of the entire distribution process. Therefore, the block generation device 100 confirms the position of the tangible object at the time of generating the transaction data on the basis of the position information of the tangible object (an article to be distributed or the like) corresponding to the transaction data, thereby determining whether or not the transaction data is appropriate. Then, the block generation device 100 includes the transaction data to the new block in a case of determining that the transaction data is appropriate in relation to the position of the tangible object, or does not include the transaction data to the new block otherwise.

Moreover, the block generation device 100 generates the first related data and the second related data using the first data and the second data included in the immediately preceding block, as described above. Then, the block generation device 100 adds the collected transaction data, the generated first related data and second related data, and the nonce to the block being generated. The block generation device 100 changes the value of the nonce until all of leading bits of the hash output in the case of applying a predetermined hash function (for example, SHA-256, RIPEMD-160, or the like) to the block become "0" (in other words, searches for a nonce that meets a predetermined condition). In the case where the block generation device 100 has found the nonce that meets the predetermined condition, the block generation device 100 adds a new block to the end of the blockchain, and broadcasts information regarding the block to be added (for example, content of the block or the block itself) onto the blockchain network 400. Thereafter, the new block is officially added to the blockchain by approval processing performed by another block generation device 100 connected to the blockchain network 400. Note that the content of the approval processing performed by the another block generation device 100 can include, but is not limited to, confirmation of appropriateness of the authority information, the position information, and the nonce, for example. For example, the another block generation device 100 may not confirm the authority information or the position information in the approval processing.

In the above-described block generation processing is basically performed by a plurality of the block generation devices 100, and the block generation device 100 that first finds the nonce that meets the predetermined condition can determine the block to be added to the blockchain. Therefore, fairness is secured in the information processing system. Note that, as described above, in the present document, the block generation device 100 using POW as the consensus algorithm has been described as an example. However, the type of the consensus algorithm used to generate a block by the block generation device 100 is not particularly limited.

### (Data Deletion Device 200)

The data deletion device 200 is an information processing device that deletes the second data including the transaction data in a case where a predetermined condition is satisfied. The second data deletion processing will be more specifically described. The data deletion device 200 confirms the authority information required to delete the transaction data. Then, the data deletion device 200 determines to delete the transaction data in the case where the data deletion device 200 (or the entity that uses the data deletion device 200) has the authority information required to delete the transaction data, or determines not to delete the transaction data otherwise.

Furthermore, as described above, the data deletion device 200 confirms the position information of the tangible object corresponding the transaction data, the position information being associated with the transaction data, and determines whether or not to delete the transaction data on the basis of the confirmation result of the position information. Then, the data deletion device 200 determines to delete the transaction data in the case of determining to delete the transaction data in relation to the position of the tangible object, or determines not to delete the transaction data otherwise.

Then, the data deletion device 200 specifies the section targeted for data deletion on the basis of the position information, as described above. For example, the data deletion device 200 specifies the second corresponding to the start and the end of distribution in the physical distribution system on the basis of the position information, and determines the section as the section targeted for data deletion.

By the above processing, the data deletion device 200, which has determined the second data (including the transaction data) to be deleted and the section targeted for data deletion, broadcasts information indicating the second data (including the transaction data) to be deleted onto the blockchain network 400. Thereafter, the second data is officially deleted by approval processing performed by another data deletion device 200 connected to the blockchain network 400. Note that the content of the approval processing performed by the data deletion device 200 can include, but is not limited to, confirmation of appropriateness of the authority information, the position information, and the section targeted for data deletion, for example. For example, the another data deletion device 200 may not confirm the authority information, the position information, or the section targeted for data deletion in the approval processing.

### (Blockchain Network 400)

The blockchain network 400 is a network in which blockchains are in circulation. As described above, the transaction generation device 300, the block generation device 100, and the data deletion device 200 can update the blockchain while maintaining consistency with a blockchain held by another information processing device, by being connected to the blockchain network 400.

Note that, in the present document, the blockchain network 400 is supposed to be a consortium network operated by a plurality of organizations or a private network operated by a single organization. However, the type of the blockchain network 400 is not particularly limited. For example, the blockchain network 400 may be a public network that does not particularly limit participants.

Note that the communication method or the type of line used in the blockchain network 400 is not particularly limited. For example, the blockchain network 400 may be implemented by a leased line network such as an internet protocol-virtual private network (IP-VPN). Furthermore, the blockchain network 400 may be implemented by a public line network such as the Internet, a telephone line network, or a satellite communication network. Furthermore, the blockchain network 400 may be implemented by various local area networks (LAN) including Ethernet (registered trademark), a wide area network (WAN), or the like. Moreover, the blockchain network 400 may be implemented by a wireless communication network such as Wi-Fi (registered trademark) or Bluetooth (registered trademark).

A configuration example of the information processing system according to the present embodiment has been described. Note that the above-described configuration described with reference to Fig. 10 is merely an example, and the configuration of the information processing system according to the present embodiment is not limited to the example. For example, the number of devices constituting the information processing system is not particularly limited. Furthermore, another device having all or part of the functions of the transaction generation device 300, the block generation device 100, and the data deletion device 200 may be provided. The configuration of the information processing system according to the present embodiment can be flexibly modified according to specifications and operations.

### (2.3. Functional Configuration Example of Transaction Generation Device 300)

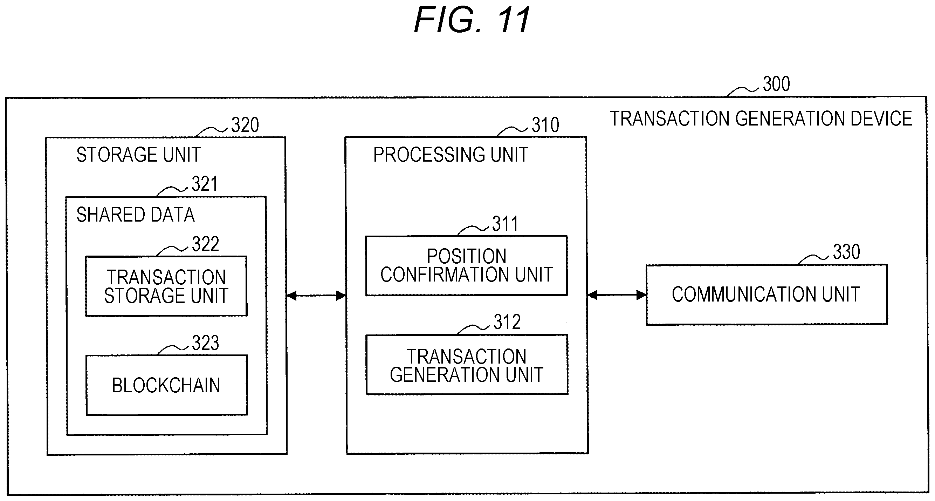

The outline of the information processing system according to the present embodiment has been described. Next, a functional configuration example of the transaction generation device 300 will be described with reference to Fig. 11. Fig. 11 is a block diagram illustrating a functional configuration example of the transaction generation device 300.

As illustrated in Fig. 11, the transaction generation device 300 includes a processing unit 310, a storage unit 320, and a communication unit 330.

### (Processing Unit 310)

The processing unit 310 has a functional configuration to implement various types of processing regarding generation of the transaction data. For example, the processing unit 310 starts transaction data generation processing specified by a user's operation input in response to the operation input. Note that the trigger for generating the transaction data is not limited to the user's operation input. As illustrated in Fig. 11, the processing unit 310 includes a position confirmation unit 311 and a transaction generation unit 312.

### (Position Confirmation Unit 311)

The position confirmation unit 311 has a functional configuration to confirm the position information of the tangible object corresponding to the transaction data when generating the transaction data. More specifically, the position confirmation unit 311 confirms the position information of the tangible object at the point of time when the transaction data is generated (note that the "point of time when the transaction data is generated" includes the point of time when the transaction data is generated or within a predetermined time before and after the point of time).

The method of confirming the position information by position confirmation unit 311 is not particularly limited. For example, in a case where the tangible object (for example, an article to be distributed) corresponding to the transaction data is equipped with various sensors (for example, a global navigation satellite system (GNSS) receiver, an atmospheric pressure sensor, a geomagnetic sensor, a proximity sensor, a gyro sensor, or an acceleration sensor), the position confirmation unit 311 may confirm (specify) the position of the tangible object by performing various communications with the tangible object to acquire sensor information of the sensors and analyzing the acquired sensor information.

For example, the position confirmation unit 311 may specify the latitude, longitude, and altitude where the tangible object is located by analyzing the sensor information acquired by the GNSS receiver and the atmospheric pressure sensor. Furthermore, the position confirmation unit 311 may specify the position of the tangible object by recognizing movement of the tangible object or a temporal change in posture by analyzing the sensor information acquired by the gyro sensor or the acceleration sensor and recognizing a state of the tangible object (for example, a state where the tangible object is being transported or a state where the tangible object is stored). For example, in a case of recognizing that the tangible object has been being stored after transported for a predetermined time, the position confirmation unit 311 may specify that the position of the tangible object is a warehouse. Furthermore, the position confirmation unit 311 may specify the position information of the tangible object on the basis of the position of the tangible object input by the user. Furthermore, the position confirmation unit 311 may specify the position information of the tangible object on the basis of the position of the tangible object analyzed and provided by another information processing device. For example, in a case where a reader/writer has read a barcode (or a radio frequency identifier (RFID) or the like) added to the tangible object, the reader/writer recognizes the position information of its own device by analyzing sensor information acquired by a sensor equipped in its own device. Then, when the reader/writer transmits the position information to the transaction generation device 300, the position confirmation unit 311 may regard the transmitted position information as the position information of the tangible object.

### (Transaction Generation Unit 312)

The transaction generation unit 312 has a functional configuration to generate transaction data. For example, the transaction generation unit 312 generates the transaction data specified by the user's operation input, and associates the generation source information and the position information acquired by the position confirmation unit 311 with the transaction data. Since the method of associating the generation source information and the position information with the transaction data is as described above, description is omitted. The transaction generation unit 312 registers the generated transaction data to a transaction storage unit 322 to be described below, and broadcasts the transaction data to other information processing devices (another transaction generation device 300, the block generation device 100, and the data deletion device 200) via the blockchain network 400. Thereby, the transaction data generated by the transaction generation unit 312 is shared by other information processing devices.

### (Storage Unit 320)

The storage unit 320 has a functional configuration to store various types of information. For example, the storage unit 320 stores a program, a parameter, or the like used by each functional configuration of the transaction generation device 300. Note that the content of the information stored in the storage unit 320 is not limited to thereto. As illustrated in Fig. 11, the storage unit 320 includes shared data 321.

### (Shared Data 321)

The shared data 321 is a set of data shared among the information processing devices connected to the blockchain network 400. Each information processing device acquires the shared data 321 via the blockchain network 400, and updates the shared data 321 while maintaining the consistency with the shared data held by other information processing devices. As illustrated in Fig. 11, the shared data 321 includes the transaction storage unit 322 and a blockchain 323.

### (Transaction Storage Unit 322)

The transaction storage unit 322 has a functional configuration to store transaction data that is not registered in the blockchain 323. In the transaction storage unit 322, transaction data generated by the transaction generation unit 312 and transaction data generated by another transaction generation device 300 and shared via the blockchain network 400 are registered. The transaction data registered in the transaction storage unit 322 is basically the same as the transaction data registered in the another transaction generation device 300, the block generation device 100, and the data deletion device 200.

### (Blockchain 323)

The blockchain 323 is a blockchain held by the transaction generation device 300. The blockchain 323 is updated on the basis of the information regarding the new block provided from the block generation device 100. The blockchain 323 is basically the same as the blockchains held by the another transaction generation device 300, the block generation device 100, and the data deletion device 200.

Note that the information registered in the blockchain 323 is not limited to the transaction data and the like described above. For example, a program executed on the blockchain 323 (hereinafter, the program is referred to as "blockchain program") may be registered in the blockchain 323.

The blockchain program is a predetermined program included in the blockchain 323 and executed on the blockchain 323. By using the blockchain program, for example, the information processing device connected to the blockchain network 400 can implement various types of processing while maintaining the consistency according to a predetermined rule. The blockchain program can implement all the processing performed for the blockchain 323. For example, the blockchain program can implement processing of adding a block to the blockchain 323 and processing of acquiring (reading) the transaction data from the blockchain 323. By providing the blockchain program on the blockchain 323, the risk of unauthorized modification of the program is reduced. The blockchain program is a chaincode in Hyperledger, but is not limited to this program. For example, the blockchain program may refer to a smart contract. Note that the processing implemented by the blockchain program is not limited to the above processing. A development language of the blockchain program or the number of blockchain programs provided on the blockchain 323 is not particularly limited.

### (Communication Unit 330)

The communication unit 330 has a functional configuration that performs various communications with external devices. For example, the communication unit 330 receives sensor information (for example, sensor information used to acquire the position information) acquired by the tangible object by performing various communications with the tangible object corresponding to the transaction data. Furthermore, the communication unit 330 shares the transaction data with other information processing devices by transmitting the transaction data generated by the transaction generation unit 312 to the blockchain network 400. Furthermore, the communication unit 330 receives various data provided from other information processing devices (for example, the transaction data generated by another transaction generation device 300, the information regarding the block generated by the block generation device 100, the information indicating the transaction data deleted by the data deletion device 200, and the like). Note that the data communicated by the communication unit 330 and the case of communication are not limited to thereto.

The functional configuration example of the transaction generation device 300 has been described. Note that the above-described configuration described with reference to Fig. 11 is merely an example, and the functional configuration of the transaction generation device 300 is not limited to the example. For example, the transaction generation device 300 does not necessarily include all of the configurations illustrated in Fig. 11. Furthermore, the functional configuration of the transaction generation device 300 can be flexibly modified according to specifications and operation.

### (2.4. Functional Configuration Example of Block Generation Device 100)

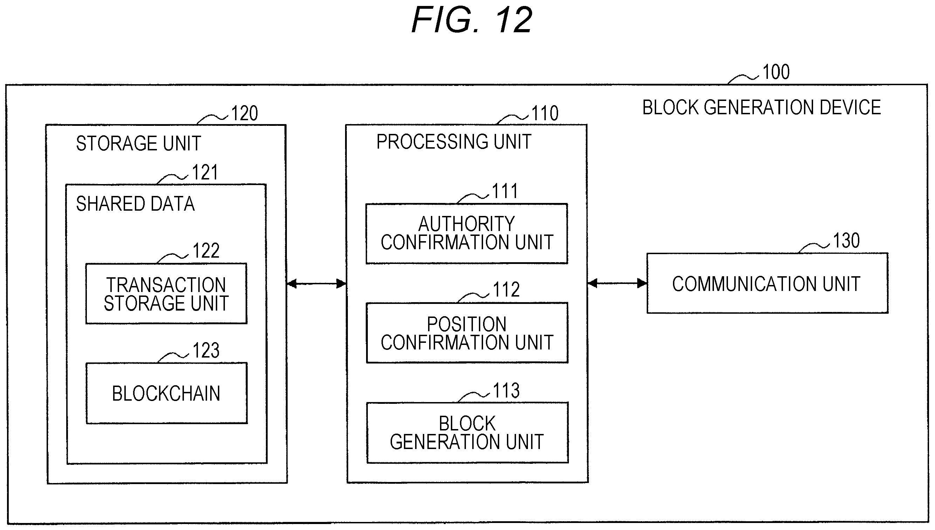

The functional configuration example of the transaction generation device 300 has been described. Next, a functional configuration example of the block generation device 100 will be described with reference to Fig. 12. Fig. 12 is a block diagram illustrating a functional configuration example of the block generation device 100.

As illustrated in Fig. 12, the block generation device 100 includes a processing unit 110, a storage unit 120, and a communication unit 130.

### (Processing Unit 110)

The processing unit 110 has a functional configuration to implement various types of processing regarding generation of a new block. For example, the processing unit 110 starts new block generation processing at predetermined timing. Here, the start timing of the new block generation processing is not particularly limited. For example, the processing unit 110 may start generation of the next new block immediately after the generation of the new block (or after the generation of the new block and elapse of a predetermined time) or may start generation of the next new block in response to the user's input operation. As illustrated in Fig. 12, the processing unit 110 includes an authority confirmation unit 111, a position confirmation unit 112, and a block generation unit 113.

### (Authority Confirmation Unit 111)

The authority confirmation unit 111 has a functional configuration to confirm the authority information held by the generation source on the basis of the generation source information of the transaction data, the generation source information being associated with the transaction data. More specifically, the authority confirmation unit 111 acquires the generation source information associated with the transaction data specified by the block generation unit 113 to be described below by accessing a transaction storage unit 122. Then, the authority confirmation unit 111 acquires, from the storage unit 120, information indicating the type of transaction data permitted to generate according to each authority information. Then, the authority confirmation unit 111 determines whether or not the source of the transaction data has appropriate authority information by comparing the information with the generation source information associated with the transaction data.

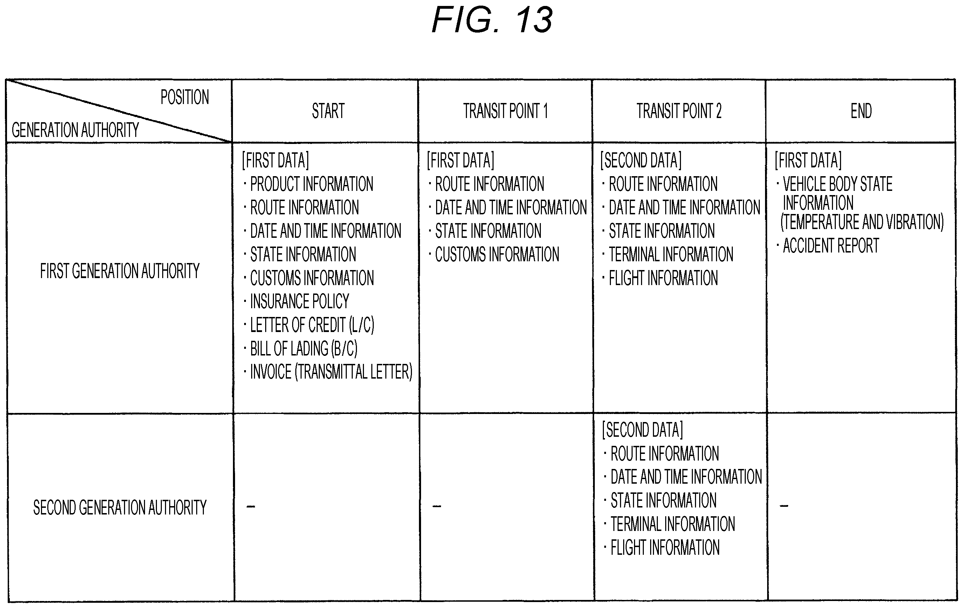

Here, an example of the information indicating the type of transaction data permitted to be generated according to each authority information will be described with reference to Fig. 13. For example, as illustrated in Fig. 13, first generation authority and second generation authority are provided as the authority information, and the type of the transaction data (including the first data and the second data) permitted to be generated is determined according to each authority information. Note that in the example in Fig. 13, the authority information permitted to generate transaction data is determined on the basis of the position information as well. The position confirmation unit 112 to be described below determines whether or not to include the transaction data to the new block on the basis of the position information of the tangible object corresponding to the transaction data, the position information being associated with the transaction data. Note that this is equivalent to the authority information permitted to generate the transaction data being determined on the basis of the position information, as illustrated in Fig. 13.

### (Position Confirmation Unit 112)

The position confirmation unit 112 has a functional configuration to confirm the position information of the tangible object corresponding to the transaction data, the position information being associated with the transaction data. More specifically, the position confirmation unit 112 acquires the position information associated with the transaction data specified by the block generation unit 113 to be described below by accessing the transaction storage unit 122. Then, the position confirmation unit 112 determines whether or not the transaction data is appropriate in relation to the position of the tangible object by comparing the position information with the information (for example, the information illustrated in Fig. 13) indicating the type of the transaction data permitted to be generated according to each position information.

### (Block Generation Unit 113)

The block generation unit 113 has a functional configuration to generate a block to be connected to a blockchain 123 in a case where a predetermined condition is satisfied. More specifically, the block generation unit 113 specifies and collects the transaction data to be included to the new block from among the transaction data stored in the transaction storage unit 122. For example, the block generation unit 113 may specify the transaction data from the transaction data having the oldest generation date and time to the transaction data that reaches a predetermined size as the transaction data to be included to the new block. At this time, in the case where information regarding the generation time and data is included in each transaction data, the block generation unit 113 analyzes each transaction data to recognize the generation date and time, or the transaction data is stored in the transaction storage unit 122 in order of generation date and time, so that the processing can be implemented. Note that the method of recognizing the generation date and time (or the generation order) of each transaction data by the block generation unit 113 is not limited to the above method.

Then, the block generation unit 113 excludes the transaction data determined by the authority confirmation unit 111 that the generation source of the transaction data does not have appropriate authority information and the transaction data determined by the position confirmation unit 112 that the transaction data is not appropriate in relation to the position of the tangible object from among the transaction data collected in the above processing.

Thereafter, the block generation unit 113 performs processing regarding consensus building in the blockchain network 400. More specifically, the block generation unit 113 generates the first related data and the second related data using the first data and the second data included in the immediately preceding block. Then, the block generation unit 113 adds the collected transaction data, the generated first related data and second related data, and the nonce to the block being generated. After that, the block generation unit 113 searches for a nonce having a hash that is output by applying a predetermined hash function to the block and satisfies a predetermined condition.

The block generation unit 113, which has found the nonce that satisfies the predetermined condition, adds the new block to the blockchain 123, and broadcasts the information regarding the block (for example, the content of the block or the block itself) to other information processing devices (transaction generation device 300, another block generation device 100, and data deletion device 200) via the blockchain network 400. Thereafter, the new block is officially added to the blockchain 123 by the approval processing performed by the block generation unit 113 included in the another block generation device 100 connected to the blockchain network 400.

Note that the content of the approval processing performed by the block generation unit 113 of the another block generation device 100 can include, but is not limited to, processing of confirming appropriateness of the authority information, the position information, and the nonce, for example. For example, the block generation unit 113 of the another block generation device 100 may not confirm the authority information or the position information in the approval processing.

### (Storage Unit 120)

The storage unit 120 has a functional configuration to store various types of information. For example, the storage unit 120 stores the above-described information (see Fig. 13) indicating the type of transaction data permitted to be generated according to each authority information. Furthermore, the storage unit 120 stores a program, a parameter, or the like used by each functional configuration of the block generation device 100. Note that the content of the information stored in the storage unit 120 is not limited to thereto. As illustrated in Fig. 12, the storage unit 120 includes shared data 121. Furthermore, the shared data 121 includes the transaction storage unit 122 and the blockchain 123.

### (Shared Data 121, Transaction Storage Unit 122, and Blockchain 123)

Since the shared data 121, the transaction storage unit 122, and the blockchain 123 are similar to the shared data 321, the transaction storage unit 322, and the blockchain 323 included in the transaction generation device 300 described above, description thereof is omitted.

### (Communication Unit 130)

The communication unit 130 has a functional configuration to perform various communications with external devices. For example, the communication unit 130 transmits the information regarding the block to be added to the blockchain 123 (for example, the content of the block or the block itself) to other information processing devices (transaction generation device 300, another block generation device 100, and data deletion device 200) via the blockchain network 400. Furthermore, the communication unit 130 receives various data provided from other information processing devices (for example, the transaction data generated by the transaction generation device 300, the information regarding the block added by another block generation device 100, the information indicating the transaction data deleted by the data deletion device 200, and the like). Note that the data communicated by the communication unit 130 and the case of communication are not limited to thereto.

The functional configuration example of the block generation device 100 has been described. Note that the above-described configuration described with reference to Fig. 12 is merely an example, and the functional configuration of the block generation device 100 is not limited to the example. For example, the block generation device 100 does not necessarily include all of the configurations illustrated in Fig. 12. Furthermore, the functional configuration of the block generation device 100 can be flexibly modified according to specifications and operation.

### (2.5. Functional Configuration Example of Data Deletion Device 200)

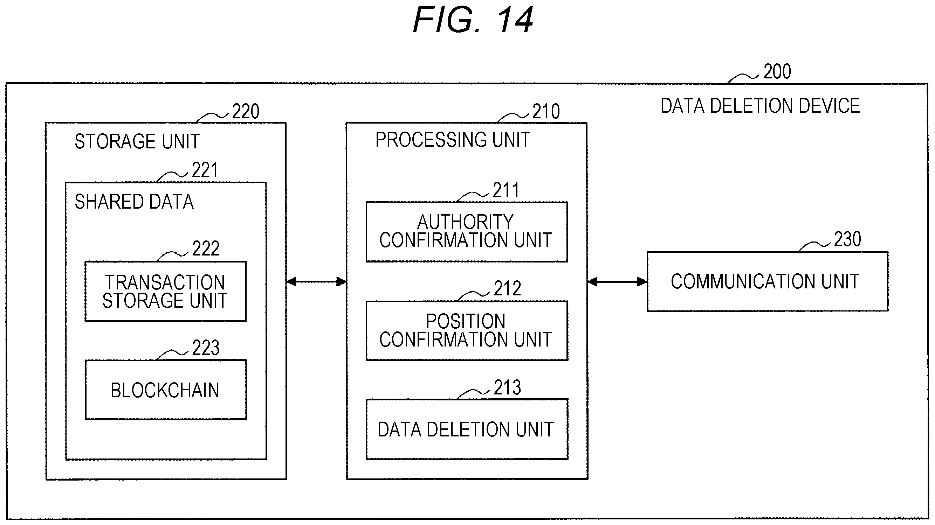

The functional configuration example of the block generation device 100 has been described. Next, a functional configuration example of the data deletion device 200 will be described with reference to Fig. 14. Fig. 14 is a block diagram illustrating a functional configuration example of the data deletion device 200.

As illustrated in Fig. 14, the data deletion device 200 includes a processing unit 210, a storage unit 220, and a communication unit 230.

### (Processing Unit 210)

The processing unit 210 has a functional configuration to implement various types of processing regarding deletion of the second data (including the transaction data). As illustrated in Fig. 14, the processing unit 210 includes an authority confirmation unit 211, a position confirmation unit 212, and a data deletion unit 213.

### (Authority Confirmation Unit 211)

The authority confirmation unit 211 has a functional configuration to confirm the authority information required to delete the second data (including the transaction data). More specifically, the authority confirmation unit 211 acquires, from the storage unit 220, information indicating the type of the transaction data permitted to be deleted according to each authority information. Then, the authority confirmation unit 211 determines whether or not the data deletion device 200 (or the entity that uses the data deletion device 200) has the authority information required to delete the transaction data specified by the block generation unit 113 to be described below by comparing the information with the authority information held by the data deletion device 200.

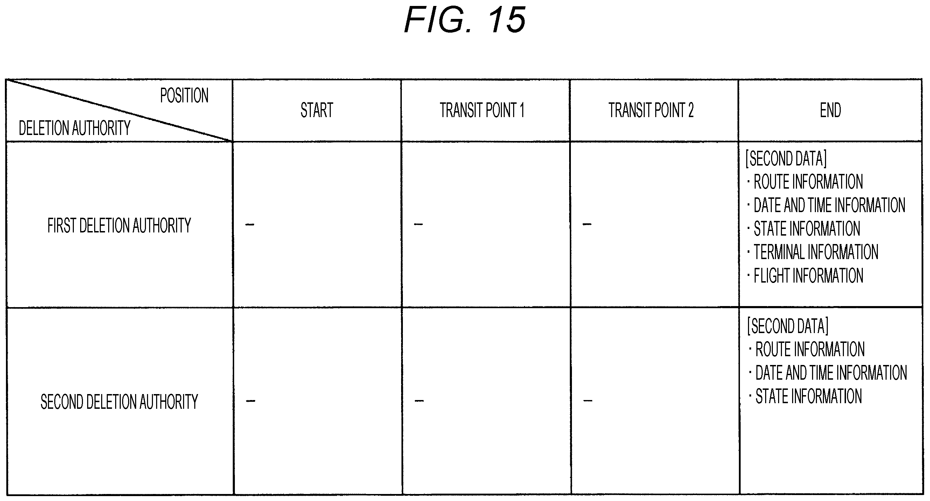

Here, an example of the information indicating the type of the transaction data permitted to be deleted according to each authority information will be described with reference to Fig. 15. For example, as illustrated in Fig. 15, first deletion authority and second deletion authority are provided as the authority information, and the type of the transaction data (second data) permitted to be deleted is determined according to each authority information. Note that in the example in Fig. 15, the authority information permitted to delete the transaction data is determined on the basis of the position information as well. The position confirmation unit 212 to be described below determines whether or not to delete the transaction data on the basis of the position information of the tangible object corresponding to the transaction data, the position information being associated with the transaction data. Note that this is equivalent to the authority information permitted to delete the transaction data being determined on the basis of the position information, as illustrated in Fig. 15. Furthermore, Fig. 15 illustrates a case in which deletion of the second data is permitted only after the article to be distributed has reached the end of distribution. However, the second data may be deleted in a case where the article is located in the middle of distribution.

### (Position Confirmation Unit 212)

The position confirmation unit 212 has a functional configuration to confirm the position information of the tangible object corresponding to the transaction data, the position information being associated with the transaction data. More specifically, the position confirmation unit 112 acquires the position information associated with the transaction data specified by the data deletion unit 213 to be described below by accessing a blockchain 223. Then, the position confirmation unit 212 determines whether or not the transaction data to be deleted is appropriate in relation to the position of the tangible object by comparing the position information with the information (for example, the information illustrated in Fig. 15) indicating the type of the transaction data permitted to be deleted according to each position information.

### (Data Deletion Unit 213)

The data deletion unit 213 has a functional configuration to delete at least part of the second data from some blocks connected to the blockchain 223 in a case where a predetermined condition is satisfied. More specifically, the data deletion unit 213 specifies the second data (including the transaction data) that satisfies the predetermined condition as data to be deleted. Here, the "predetermined condition" includes, but is not limited to, for example, elapse of a predetermined period from when the article to be distributed has reached the end of distribution, appropriate receipt of the article by a store that is the end of distribution (registration of the receipt information as transaction data) in a physical distribution system, and the like. For example, the data deletion unit 213 may specify the transaction data regarding the article as the data to be deleted even in a case where the article to be distributed is located in the middle of distribution.

Then, the data deletion unit 213 excludes the transaction data determined by the authority confirmation unit 211 that the data deletion device 200 (or the entity that uses the data deletion device 200) does not have appropriate authority information, and the transaction data determined by the position confirmation unit 212 that the transaction data cannot be deleted in relation to the position of the tangible object.

Thereafter, the data deletion unit 213 deletes the second data including the transaction data to be deleted from some blocks connected to the blockchain 223, and broadcasts the information indicating the transaction data to be deleted (for example, the ID of the transaction data or the transaction data itself) to other information processing devices (transaction generation device 300, block generation device 100, and another data deletion device 200) via the blockchain network 400 (note that the data deletion unit 213 maintains the first data). Thereafter, the transaction data to be deleted is officially deleted from the blockchain by the approval processing by the data deletion unit 213 provided in the another data deletion device 200 connected to the blockchain network 400.

Here, the content of the approval processing performed by the data deletion unit 213 provided in the another data deletion device 200 includes, but is not limited to, confirmation of appropriateness of the authority information, the position information, and the section targeted for data deletion, for example. For example, the data deletion unit 213 provided in the another data deletion device 200 may not confirm the authority information, the position information, or the section targeted for data deletion in the approval processing. Note that, as described above, the data deletion unit 213 basically deletes at least part of the second data. However, the data deletion unit 213 may delete part of the first data as needed (in this case, the association between blocks by the first related data is lost).

### (Storage Unit 220)

The storage unit 220 has a functional configuration to store various types of information. For example, the storage unit 220 stores the above-described information (see Fig. 15) indicating the type of the transaction data permitted to be deleted according to each authority information. Furthermore, the storage unit 220 stores a program, a parameter, or the like used by each functional configuration of the data deletion device 200. Note that the content of the information stored in the storage unit 220 is not limited to thereto. As illustrated in Fig. 14, the storage unit 220 includes shared data 221. Furthermore, the shared data 221 includes a transaction storage unit 222 and the blockchain 223.

### (Shared Data 221, Transaction Storage Unit 222, and Blockchain 223)

Since the shared data 221, the transaction storage unit 222, and the blockchain 223 are similar to the shared data 321, the transaction storage unit 322, and the blockchain 323 included in the transaction generation device 300 described above, description thereof is omitted.

### (Communication Unit 230)

The communication unit 230 has a functional configuration to perform various communications with external devices. For example, the communication unit 230 transmits the information indicating the transaction data to be deleted (for example, the ID of the transaction data or the transaction data itself) to other information processing devices (transaction generation device 300, block generation device 100, and another data deletion device 200) via the blockchain network 400. Furthermore, the communication unit 230 receives various data provided from other information processing devices (for example, the transaction data generated by the transaction generation device 300, the information regarding the block added by the block generation device 100, the information indicating the transaction data deleted by the another data deletion device 200, and the like). Note that the data communicated by the communication unit 230 and the case of communication are not limited to thereto.

The functional configuration example of the data deletion device 200 has been described. Note that the above-described configuration described with reference to Fig. 14 is merely an example, and the functional configuration of the data deletion device 200 is not limited to the example. For example, the data deletion device 200 does not necessarily include all of the configurations illustrated in Fig. 14. Furthermore, the functional configuration of the data deletion device 200 can be flexibly modified according to specifications and operation.

### (2.6. Processing Flow)

The functional configuration example of the data deletion device 200 has been described. Next, an example of a processing flow of each device will be described.

### (Transaction Data Generation Processing)

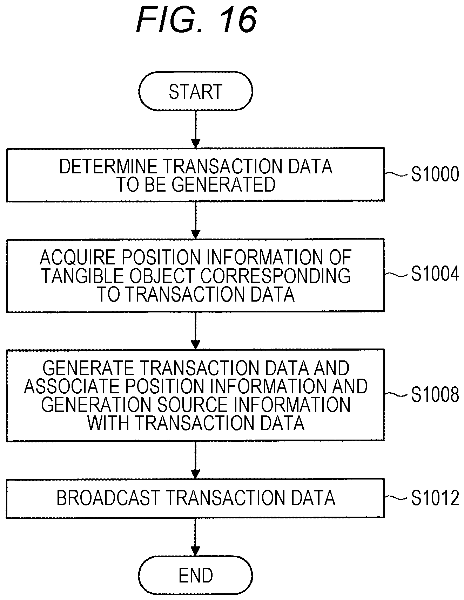

First, the transaction data generation processing by the transaction generation device 300 will be described with reference to Fig. 16. Fig. 16 is a flowchart illustrating a specific example of the transaction data generation processing by the transaction generation device 300.

In step S1000, the transaction generation unit 312 of the transaction generation device 300 determines the transaction data to be generated. For example, the transaction generation unit 312 determines the transaction data specified by the user's operation input as the transaction data to be generated. In step S1004, the position confirmation unit 311 acquires the position information of the tangible object corresponding to the transaction data to be generated. In step S1008, the transaction generation unit 312 generates the transaction data to be generated and associates the generation source information and the position information with the transaction data. In step S1012, the transaction generation unit 312 broadcasts the generated transaction data to other information processing devices (another transaction generation device 300, block generation device 100, and data deletion device 200) via the blockchain network 400, and then the series of processing is terminated. As a result, the block generation device 100 can perform new block generation processing using the transaction data.

### (Block Generation Processing)

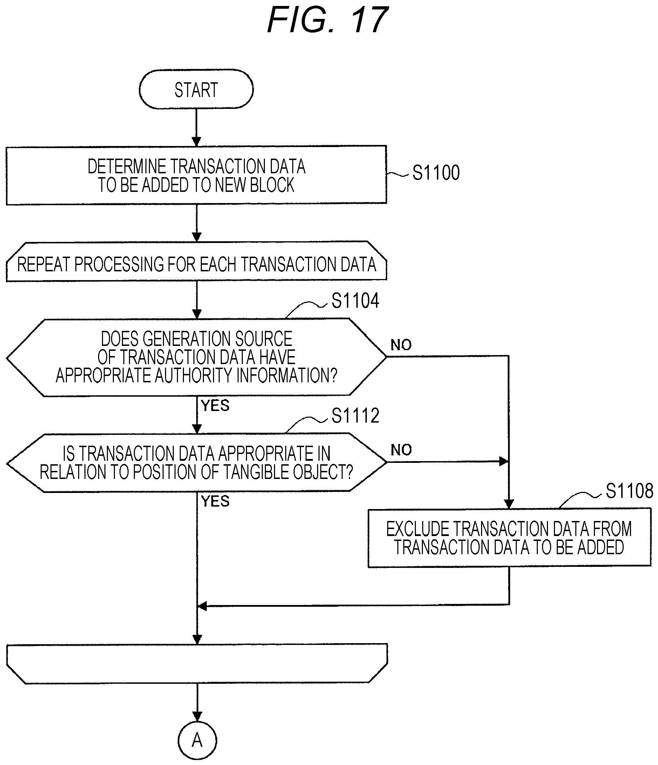

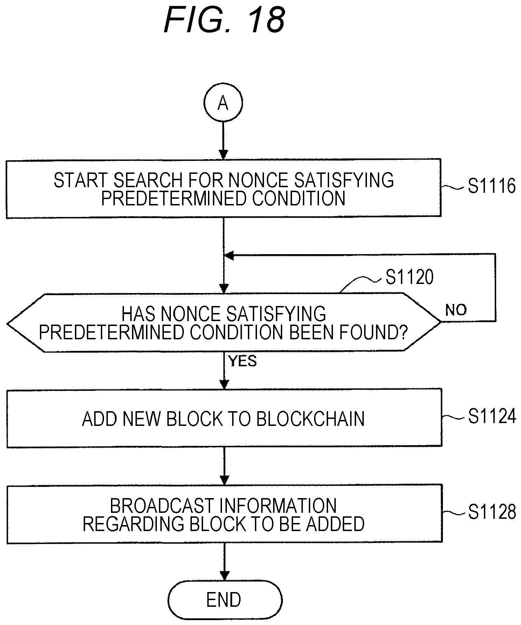

Next, the block generation processing by the block generation device 100 will be described with reference to Figs. 17 and 18. Figs. 17 and 18 are flowcharts illustrating a specific example of the block generation processing by the block generation device 100.

In step S1100, the block generation unit 113 of the block generation device 100 determines the transaction data to be added to the new block. For example, the block generation unit 113 determines the transaction data from the transaction data having the oldest generation date and time to the transaction data that reaches a predetermined size as the transaction data to be added to the new block.

In step S1104, the authority confirmation unit 111 confirms the authority information of the generation source on the basis of the generation source information of each transaction data, the generation source information being associated with the transaction data, to determine whether or not the generation source of the transaction data has appropriate authority information. In the case where the generation source of the transaction data does not have appropriate authority information (step S1104/No), in step S1108, the block generation unit 113 excludes the transaction data from the transaction data to be added to the new block.

In the case where the generation source of the transaction data has appropriate authority information (step S1104/Yes), in step S1112, the position confirmation unit 112 determines whether or not the transaction data is appropriate in relation to the position of the tangible object by confirming the position information of the tangible object corresponding to the transaction data, the position information being associated with the transaction data. In the case where the transaction data is not appropriate in relation to the position of the tangible object (step S1112/No), in step S1108, the block generation unit 113 excludes the transaction data from the transaction data to be added to the new block.

In the case where the transaction data is appropriate in relation to the position of the tangible object (step S1112/Yes), the block generation unit 113 does not exclude the transaction data from the transaction data to be added to the new block. Each functional configuration of the block generation device 100 repeats the processing in steps S1104 to S1112 for each transaction data determined as the transaction data to be added to the new block in step S1100.

Thereafter, the block generation unit 113 performs the processing regarding consensus building in the blockchain network 400. More specifically, in step S1116, the block generation unit 113 starts the search for the nonce that satisfies the predetermined condition. In the case where the block generation unit 113 finds the nonce that satisfies the predetermined condition (step S1120/Yes), the block generation unit 113 adds the new block to the blockchain in step S1124, and broadcasts the information regarding the block to be added (for example, the content of the block or the block itself) to other information processing devices via the blockchain network 400 in step S1128, so that the series of processing ends. Thereafter, the new block is officially added to the blockchain by the approval processing performed by the block generation unit 113 included in the another block generation device 100 connected to the blockchain network 400.

### (Second Data Deletion Processing)

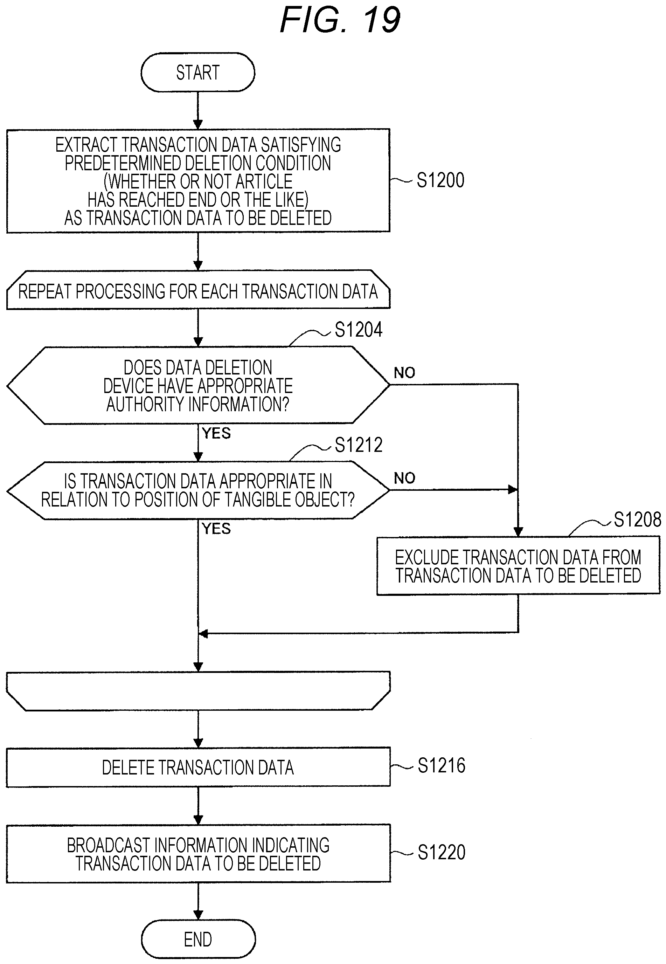

Next, the second data deletion processing by the data deletion device 200 will be described with reference to Fig. 19. Fig. 19 is a flowchart illustrating a specific example of the second data deletion processing by the data deletion device 200.

In step S1200, the data deletion unit 213 of the data deletion device 200 extracts the transaction data (second data) that satisfies the predetermined condition (for example, whether or not the article to be distributed has reached the end of distribution) as the transaction data to be deleted.

In step S1204, the authority confirmation unit 211 determines whether or not the data deletion device 200 has appropriate authority information by confirming the authority information required to delete the transaction data. In the case where the data deletion device 200 does not have appropriate authority information (step S1204/No), in step S1208, the data deletion unit 213 excludes the transaction data from the transaction data to be deleted.

In the case where the data deletion device 200 has appropriate authority information (step S1204/Yes), in step S1212, the position confirmation unit 212 determines whether or not the transaction data to be deleted is appropriate in relation to the position of the tangible object by confirming the position information of the tangible object corresponding to the transaction data, the position information being associated with the transaction data. In the case where the transaction data is not appropriate in relation to the position of the tangible object (step S1212/No), in step S1208, the data deletion unit 213 excludes the transaction data from the transaction data to be deleted.

In the case where the transaction data to be deleted is appropriate in relation to the position of the tangible object (step S1212/Yes), the data deletion unit 213 does not exclude the transaction data from the transaction data to be deleted. Each functional configuration of the data deletion device 200 repeats the processing in steps S1204 to S1212 for each transaction data extracted as the transaction data to be deleted in step S1200.

Thereafter, the data deletion unit 213 deletes the second data including the transaction data to be deleted from the blockchain in step S1216, and broadcasts the information indicating the transaction data to be deleted (for example, the ID of the transaction data or the transaction data itself) to other information processing devices via the blockchain network 400 in step S1220, so that the series of processing ends. Thereafter, the transaction data to be deleted is officially deleted from the blockchain by the approval processing by the data deletion unit 213 provided in the another data deletion device 200 connected to the blockchain network 400.

Note that the steps in the flowcharts in Figs. 16 to 19 do not necessarily need be processed chronologically in the described order. For example, the steps in the flowchart may be processed in a different order from the described order or may be processed in parallel.

### <3. Modification>

Examples of the processing flows of the devices have been described. Next, a variation regarding a mode of associating blocks will be described as a modification of the present disclosure.

As described above, the first related data is data associated with the first data of the immediately preceding block, and the second related data is data associated with the data including at least the second data different from the first data. Then, in the above-described embodiment, the second related data is associated with data including all the first data and all the second data (see Fig. 7 and the like).

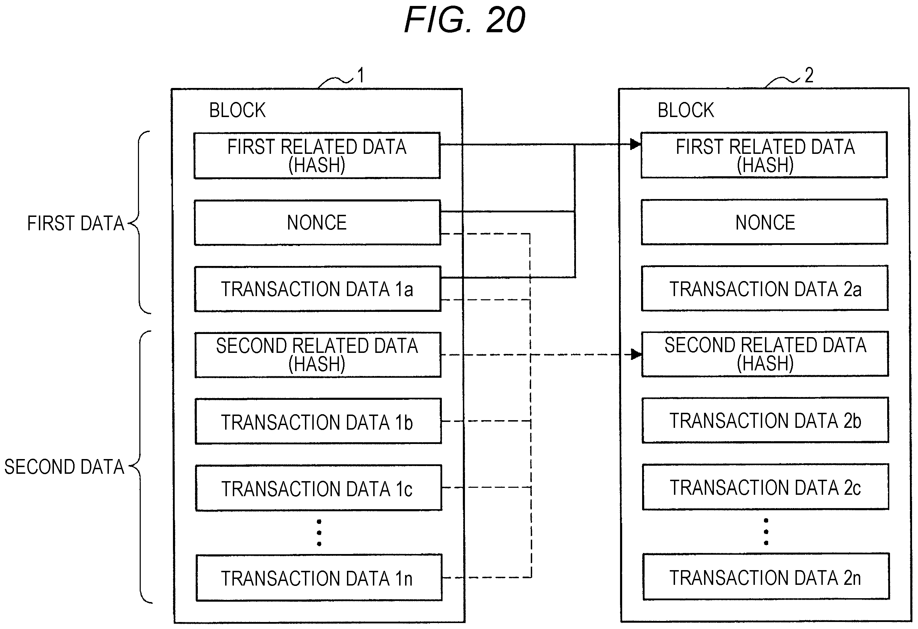

However, the mode of the second related data is not limited to the above example. For example, as illustrated in Fig. 20, the second related data may be associated with data including the first data excluding some data (the first related data in the example in Fig. 20) and all the second data. Note that the excluded first data is not limited to the first related data. For example, the nonce or the transaction data 1a in Fig. 20 may be excluded.

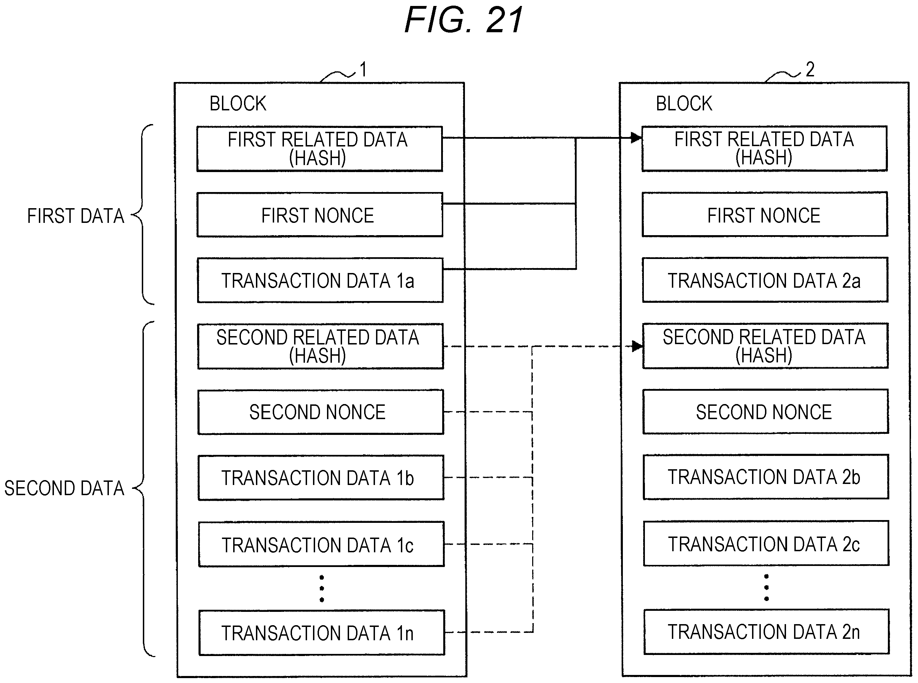

Furthermore, as illustrated in Fig. 21, the second related data may be associated with data not including the first data and including only the second data. For example, in the case where the nonce (described as "first nonce" in Fig. 21) used to generate the first related data and the nonce (described as "second nonce" in Fig.21) used to generate the second related data are provided, the second related data may be associated with the data not including the first data and including only the second data (in other words, the second related data can be associated with the data not including the first data and including only the second data by providing the plurality of nonces), as illustrated in Fig. 21.

In the case where POW is adopted as the consensus algorithm and a nonce is included in each block, occurrence of tampering can be detected using the nonce. More specifically, in a case where certain transaction data is tampered with, the nonce included in the same block as the transaction data becomes unable to satisfy a predetermined condition (such as all the leading bits of the hash output in the case of applying a predetermined hash function to the block become "0"). Therefore, inconsistency occurs. To eliminate the inconsistency by a person who has tampered with the transaction data, all the nonces included in the blocks connected after the block that has been tampered with need to be searched again, and thus it is virtually impossible to tamper with the transaction data from a viewpoint of a load required for the processing.

Here, in the above-described embodiment, in the case where part of the second data is deleted by the data deletion device 200, the nonce included in the block becomes unable to satisfy the predetermined condition, and thus inconsistency occurs. In other words, in the above-described embodiment, tampering using a nonce becomes impossible to detect when part of the second data is deleted.

Meanwhile, as illustrated in Fig. 20, by providing the first nonce used to generate the first related data and the second nonce used to generate the second related data, the first nonce included in the block keeps satisfying the predetermined condition even in the case where part of the second data is deleted by the data deletion device 200. Therefore, in the present modification, tampering with the first data can be detected using the first nonce even after part of the second data is deleted. Therefore, the present modification can be said to be useful.

Note that, in the case of associating three or more types of data, as described above, the nonce may be provided according to the association type. More specifically, for example, in the case where third related data associated with data including at least third data different from the first and second data is provided in addition to the first related data and the second related data, a third nonce used to generate the third related data may be further provided.

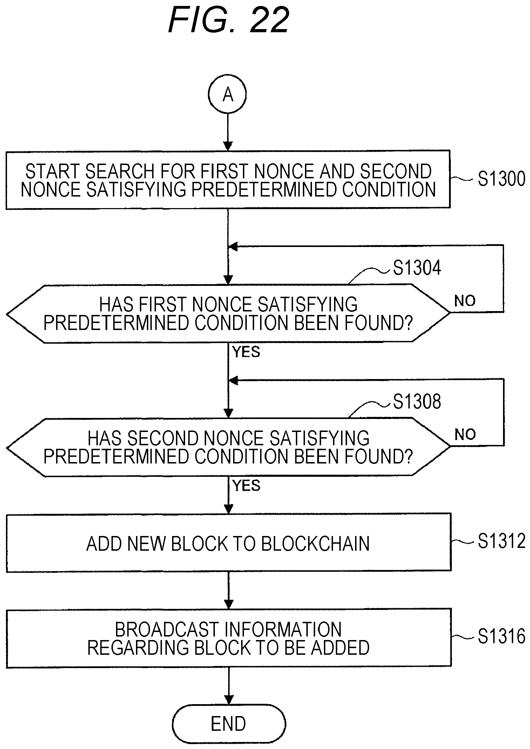

Next, the block generation processing by the block generation device 100 according to the present modification will be described with reference to Fig. 22. Fig. 22 is a flowchart illustrating a specific example of the block generation processing by the block generation device 100 according to the present modification, and illustrates a specific example of a series of processing performed after step S1112 illustrated in Fig. 17.

In the processing up to step S1112 in Fig. 17, the transaction data to be added to the new block is determined. Thereafter, in step S1300 in Fig. 22, the block generation unit 113 according to the present modification starts a search for the first nonce and the second nonce that satisfy the predetermined condition. For example, the block generation unit 113 changes the value of the nonce until all the leading bits of the hash output in the case of applying a predetermined hash function (for example, SHA-256, RIPEMD-160, or the like) to the first data in the new block become "0". Furthermore, similarly, the block generation unit 113 changes the value of the nonce until all the leading bits of the hash output in the case of applying a predetermined hash function to the second data in the new block become "0".

In the case where the block generation unit 113 has found the first nonce that satisfies the predetermined condition (step S1304/Yes) and the second nonce that satisfies the predetermined condition (step S1308/Yes), in step S1312, the block generation unit 113 adds the new block to the blockchain. Then, in step S1316, the block generation unit 113 broadcasts the information regarding the block to be added (for example, the content of the block or the block itself) to other information processing devices via the blockchain network 400, so that the series of processing ends. Thereafter, the new block is officially added to the blockchain by the approval processing performed by the block generation unit 113 included in the another block generation device 100 connected to the blockchain network 400.

Note that the steps in the flowchart in Fig. 22 do not necessarily need be processed chronologically in the described order. For example, the steps in the flowchart may be processed in a different order from the described order or may be processed in parallel.

### <4. Hardware Configuration Example>

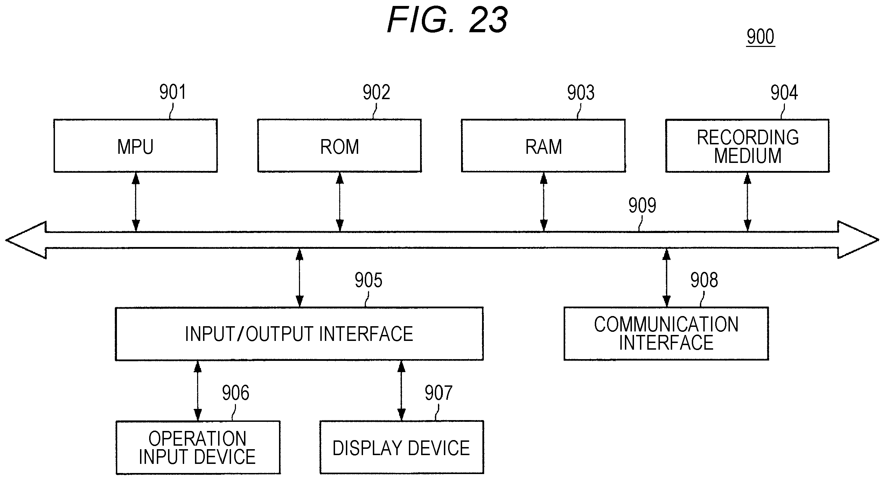

The modification of the present disclosure has been described. Next, a hardware configuration example of each device will be described with reference to Fig. 23.

Fig. 23 is a block diagram illustrating an example of a hardware configuration of the block generation device 100, the data deletion device 200, or the transaction generation device 300. These devices can be embodied by the information processing device 900 illustrated in Fig. 23.

The information processing device 900 includes, for example, an MPU 901, a ROM 902, a RAM 903, a recording medium 904, an input/output interface 905, an operation input device 906, a display device 907, and a communication interface 908. Furthermore, the information processing device 900 has the configuration elements connected with a bus 909 as a data transmission path, for example.

The MPU 901 is configured by, for example, one or more processors configured by an arithmetic circuit such as an MPU, various processing circuits, or the like, and functions as the processing unit 110 of the block generation device 100, the processing unit 210 of the data deletion device 200, or the processing unit 310 of the transaction generation device 300. Note that these functional configurations may be configured by a dedicated (or general-purpose) circuit (for example, a processor that is separate from the MPU 901) that can implement the above-described various types of processing.

The ROM 902 stores a program and control data such as calculation parameters used by the MPU 901. The RAM 903 temporarily stores the program to be executed by the MPU 901, and the like, for example.

The recording medium 904 functions as the storage unit 120 of the block generation device 100, the storage unit 220 of the data deletion device 200, or the storage unit 320 of the transaction generation device 300, and stores various data such as the data and the programs related to the information processing according to the embodiments. Here, examples of the recording medium 904 include a magnetic recording medium such as a hard disk, and a nonvolatile memory such as a flash memory. Furthermore, the recording medium 904 may be attachable to and detachable from the information processing device 900.

The input/output interface 905 connects, for example, the operation input device 906, the display device 907, and the like. Here, examples of the input/output interface 905 include a universal serial bus (USB) terminal, a digital visual interface (DVI) terminal, a high-definition multimedia interface (HDMI) (registered trademark) terminal, various processing circuits, and the like.

Furthermore, the operation input device 906 is provided on the information processing device 900, for example, and is connected to the input/output interface 905 inside the information processing device 900. Examples of the operation input device 906 include a keyboard, a mouse, a keypad, a touch panel, a microphone, an operation button, a rotary selector such as a direction key or a jog dial, or a combination thereof.

Furthermore, the display device 907 is provided on the information processing device 900, for example, and is connected to the input/output interface 905 inside the information processing device 900. Examples of the display device 907 include a liquid crystal display (LCD) and an organic electro-luminescence (EL) display.

Note that it is needless to say that the input/output interface 905 can be connected to an external device such as an external operation input device or an external display device outside the information processing device 900. Furthermore, the display device 907 may be a device capable of display and user operation, such as a touch panel.

The communication interface 908 is a communication unit included in the information processing device 900, and functions as the communication unit 130 of the block generation device 100, the communication unit 230 of the data deletion device 200, or the communication unit 330 of the transaction generation device 300. Furthermore, the communication interface 908 may have a function to perform wireless or wired communication with an arbitrary external device such as a server via an arbitrary network (or directly), for example. Here, examples of the communication interface 908 include a communication antenna and radio frequency (RF) circuit (wireless communication), IEEE802.15.1 port and transmission/reception circuit (wireless communication), IEEE802.11 port and transmission/reception circuit (wireless communication), and a local area network (LAN) terminal and a transmission/reception circuit (wired communication).

Note that the hardware configuration of the information processing device 900 is not limited to the configuration illustrated in Fig. 23. For example, the information processing device 900 does not need to include the communication interface 908 in the case of performing communication via a connected external communication device. Furthermore, the communication interface 908 may have a configuration capable of performing communication by a plurality of communication methods. Furthermore, the information processing device 900 does not need to include the operation input device 906 or the display device 907, for example. Furthermore, for example, a part or all of the configurations illustrated in Fig. 23 may be implemented by one or more integrated circuits (ICs).

### <5. Conclusion>

As described above, the block generation device 100 generates the block including the first related data (for example, a hash of the first data) associated with the first data that is at least part of data included in the immediately preceding block and the second related data (for example, a hash of data including at least the second data different from the first data) associated with the data included in the immediately preceding block and including the second data different from the first data, and connects the block to the blockchain. At that time, the block generation device 100 confirms the authority information of the generation source on the basis of the generation source information associated with the transaction data, and determines whether or not to include the transaction data to a block to be generated on the basis of the confirmation result of the authority information. Furthermore, the block generation device 100 confirms the position information of the tangible object corresponding the transaction data, the position information being associated with the transaction data, and determines whether or not to include the transaction data to a block to be generated on the basis of the confirmation result of the position information.

Then, the data deletion device 200 deletes at least part of the second data from some blocks connected to the blockchain. At that time, the data deletion device 200 confirms the authority information required to delete the transaction data, and determines whether or not to delete the transaction data on the basis of the confirmation result of the authority information. Furthermore, the data deletion device 200 confirms the position information associated with the transaction data, and determines whether or not to delete the transaction data on the basis of the confirmation result of the position information. Then, the data deletion device 200 that has determined to delete the transaction data deletes at least part of the second data present in the section determined on the basis of the position information.

Although the favorable embodiment of the present disclosure has been described in detail with reference to the accompanying drawings, the technical scope of the present disclosure is not limited to such examples. It is obvious that persons having ordinary knowledge in the technical field of the present disclosure can conceive various modifications or alterations within the scope of the technical idea described in the claims, and the modifications and alterations are naturally understood to belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification together with or in place of the above-described effects.

Note that following configurations also belong to the technical scope of the present disclosure.
(1) An information processing device including:
   a block generation unit configured to generate a block to be connected to a blockchain, the block including first related data associated with first data that is at least part of data included in an immediately preceding block and second related data associated with data included in the immediately preceding block and including at least second data different from the first data.
(2) The information processing device according to (1), further including:
   an authority confirmation unit configured to confirm authority information of a generation source on the basis of information indicating the generation source of transaction data included in the first data or the second data, the information being associated with the transaction data, in which
   the block generation unit determines whether or not to include the transaction data to a block to be generated on the basis of a confirmation result of the authority information.
(3) The information processing device according to (1) or (2), further including:
   a position confirmation unit configured to confirm position information of a tangible object corresponding to transaction data included in the first data or the second data, the position information being associated with the transaction data, in which
   the block generation unit determines whether or not to include the transaction data to a block to be generated on the basis of a confirmation result of the position information.
(4) The information processing device according to (3), in which
   the position information is information indicating a position of the tangible object at a point of time when the transaction data is generated or within a predetermined time before or after the point of time.
(5) The information processing device according to (3) or (4), in which
   the tangible object is an article to be distributed, and
   the transaction data includes data generated in a distribution process of the article.
(6) An information processing method executed by a computer, the information processing method including:
   generating a block to be connected to a blockchain, the block including first related data associated with first data that is at least part of data included in an immediately preceding block and second related data associated with data included in the immediately preceding block and including at least second data different from the first data.
(7) A program for causing a computer to implement:
   generating a block to be connected to a blockchain, the block including first related data associated with first data that is at least part of data included in an immediately preceding block and second related data associated with data included in the immediately preceding block and including at least second data different from the first data.
(8) An information processing device including:
   a data deletion unit configured to delete at least part of second data from some blocks connected to a blockchain, the block including first related data associated with first data that is at least part of data included in an immediately preceding block and second related data associated with data included in the immediately preceding block and including at least the second data different from the first data.
(9) The information processing device according to (8), in which
   the data deletion unit deletes at least transaction data included in the second data.
(10) The information processing device according to (9), further including:
   an authority confirmation unit configured to confirm authority information required to delete the transaction data included in the second data, in which
   the data deletion unit determines whether or not to delete the transaction data on the basis of a confirmation result of the authority information.
(11) The information processing device according to (9) or (10), further including:
   a position confirmation unit configured to confirm position information of a tangible object corresponding to transaction data, the position information being associated with the transaction data included in the second data, in which
   the data deletion unit determines whether or not to delete the transaction data on the basis of a confirmation result of the position information.
(12) The information processing device according to (11), in which
   the position information is information indicating a position of the tangible object at a point of time when the transaction data is generated or within a predetermined time before or after the point of time.
(13) The information processing device according to (11) or (12), in which
   the data deletion unit deletes at least part of the transaction data corresponding to a section determined on the basis of the position information.
(14) The information processing device according to (13), in which
   the tangible object is an article to be distributed, and
   the transaction data includes data associated with information of a distribution process of the article.
(15) The information processing device according to (14), in which
   the section is a section corresponding to start and end of the distribution.
(16) The information processing device according to any one of (9) to (15), in which
   the data deletion unit deletes the transaction data included in the second data and maintains the first data.
(17) The information processing device according to (16), in which
   the first data includes nonce data of a blockchain, the nonce data being data independent of the second data,
   the second related data is hash data associated with the nonce data of the blockchain included in the first data, and
   the data deletion unit deletes at least the transaction data and the second related data included in the second data.
(18) An information processing method executed by a computer, the information processing method including:
   deleting at least part of second data from some blocks connected to a blockchain, the block including first related data associated with first data that is at least part of data included in an immediately preceding block and second related data associated with data included in the immediately preceding block and including at least the second data different from the first data.
(19) A program for causing a computer to implement:
   deleting at least part of second data from some blocks connected to a blockchain, the block including first related data associated with first data that is at least part of data included in an immediately preceding block and second related data associated with data included in the immediately preceding block and including at least the second data different from the first data.

### REFERENCE SIGNS LIST

- 100: Block generation device
- 110: Processing unit
- 111: Authority confirmation unit
- 112: Position confirmation unit
- 113: Block generation unit
- 120: Storage unit
- 121: Shared data
- 122: Transaction storage unit
- 123: Blockchain
- 130: Communication unit
- 200: Data deletion device
- 210: Processing unit
- 211: Authority confirmation unit
- 212: Position confirmation unit
- 213: Data deletion unit
- 220: Storage unit
- 221: Shared data
- 222: Transaction storage unit
- 223: Blockchain
- 230: Communication unit
- 300: Transaction generation device
- 310: Processing unit
- 311: Position confirmation unit
- 312: Transaction generation unit
- 320: Storage unit
- 321: Shared data
- 322: Transaction storage unit
- 323: Blockchain
- 400: Blockchain network

## Claims

1. An information processing device comprising:
a block generation unit configured to generate a block to be connected to a blockchain, the block including first related data associated with first data that is at least part of data included in an immediately preceding block and second related data associated with data included in the immediately preceding block and including at least second data different from the first data.

2. The information processing device according to claim 1, further comprising:
an authority confirmation unit configured to confirm authority information of a generation source on a basis of information indicating the generation source of transaction data included in the first data or the second data, the information being associated with the transaction data, wherein
the block generation unit determines whether or not to include the transaction data to a block to be generated on a basis of a confirmation result of the authority information.

3. The information processing device according to claim 1, further comprising:
a position confirmation unit configured to confirm position information of a tangible object corresponding to transaction data included in the first data or the second data, the position information being associated with the transaction data, wherein
the block generation unit determines whether or not to include the transaction data to a block to be generated on a basis of a confirmation result of the position information.

4. The information processing device according to claim 3, wherein
the position information is information indicating a position of the tangible object at a point of time when the transaction data is generated or within a predetermined time before or after the point of time.

5. The information processing device according to claim 3, wherein
the tangible object is an article to be distributed, and
the transaction data includes data generated in a distribution process of the article.

6. An information processing method executed by a computer, the information processing method comprising:
generating a block to be connected to a blockchain, the block including first related data associated with first data that is at least part of data included in an immediately preceding block and second related data associated with data included in the immediately preceding block and including at least second data different from the first data.

7. A program for causing a computer to implement:
generating a block to be connected to a blockchain, the block including first related data associated with first data that is at least part of data included in an immediately preceding block and second related data associated with data included in the immediately preceding block and including at least second data different from the first data.

8. An information processing device comprising:
a data deletion unit configured to delete at least part of second data from some blocks connected to a blockchain, the block including first related data associated with first data that is at least part of data included in an immediately preceding block and second related data associated with data included in the immediately preceding block and including at least the second data different from the first data.

9. The information processing device according to claim 8, wherein
the data deletion unit deletes at least transaction data included in the second data.

10. The information processing device according to claim 9, further comprising:
an authority confirmation unit configured to confirm authority information required to delete the transaction data, wherein
the data deletion unit determines whether or not to delete the transaction data on a basis of a confirmation result of the authority information.

11. The information processing device according to claim 9, further comprising:
a position confirmation unit configured to confirm position information of a tangible object corresponding to transaction data, the position information being associated with the transaction data, wherein
the data deletion unit determines whether or not to delete the transaction data on a basis of a confirmation result of the position information.

12. The information processing device according to claim 11, wherein
the position information is information indicating a position of the tangible object at a point of time when the transaction data is generated or within a predetermined time before or after the point of time.

13. The information processing device according to claim 11, wherein
the data deletion unit deletes at least part of the transaction data corresponding to a section determined on a basis of the position information.

14. The information processing device according to claim 13, wherein
the tangible object is an article to be distributed, and
the transaction data includes data associated with information of a distribution process of the article.

15. The information processing device according to claim 14, wherein
the section is a section corresponding to start and end of the distribution.

16. The information processing device according to claim 9, wherein
the data deletion unit deletes the transaction data included in the second data and maintains the first data.

17. The information processing device according to claim 16, wherein
the first data includes nonce data of a blockchain, the nonce data being data independent of the second data,
the second related data is hash data associated with the nonce data of the blockchain included in the first data, and
the data deletion unit deletes at least the transaction data and the second related data included in the second data.

18. An information processing method executed by a computer, the information processing method comprising:
deleting at least part of second data from some blocks connected to a blockchain, the block including first related data associated with first data that is at least part of data included in an immediately preceding block and second related data associated with data included in the immediately preceding block and including at least the second data different from the first data.

19. A program for causing a computer to implement:
deleting at least part of second data from some blocks connected to a blockchain, the block including first related data associated with first data that is at least part of data included in an immediately preceding block and second related data associated with data included in the immediately preceding block and including at least the second data different from the first data.
